# EUROPÄISCHE PATENTSCHRIFT

(11) **EP 1 142 863 B1**
(45) Veröffentlichungstag und Bekanntmachung des Hinweises auf die Patenterteilung: **01.08.2007**
(21) Anmeldenummer: 01108302.9
(22) Anmeldetag: 02.04.2001
(51) Int. Cl.: C07C 69/94, C09K 19/20, C09K 19/38, C09K 19/00, C09B 67/00, C09D 5/00

(54) **Polymerisierbare Flüssigkristalle**
Polymerisable liquid crystals
Cristaux liquides polymérisables

(30) Priorität: 03.04.2000 DE 10016524
(43) Veröffentlichungstag der Anmeldung: 10.10.2001
(73) Patentinhaber: BASF Aktiengesellschaft, 67056 Ludwigshafen (DE)
(72) Erfinder: Prechtl, Frank, 60318 Frankfurt (DE); Parker, Robert, 68161 Mannheim (DE); Schuhmacher, Peter, 68163 Mannheim (DE); Schneider, Norbert, 67122 Altrip (DE); Haremza, Sylke, 69151 Neckargemünd (DE); Schmidt, Hans-Werner, 95444 Bayreuth (DE); Schmitt, Gerold, 64297 Darmstadt (DE)
(74) Vertreter: Kinzebach, Werner

(56) Entgegenhaltungen:
- EP-A- 0 755 918
- WO-A-95/07268
- WO-A-95/22079

## Beschreibung

Die Erfindung betrifft neuartige polymerisierbare flüssigkristalline Verbindungen, Verfahren zu deren Herstellung, Zusammensetzungen, welche diese Verbindungen enthalten, sowie Beschichtungsmassen und Pigmente auf Basis dieser Verbindungen zu verschiedensten Anwendungszwecken.

Orientierte, niedermolekulare Flüssigkristalle lassen sich durch UV-Polymerisation permanent fixieren, da die UV-Polymerisation so schnell abläuft, dass keine Relaxation der orientierten Flüssigkristalle möglich ist. Setzt man vernetzbare cholesterische Flüssigkristalle oder vernetzbare Mischungen aus nematischen Flüssigkristallen und chiralen Dotierstoffen ein, so erhält man durch die UV-Polymerisation cholesterische Netzwerke, die die charakteristischen optischen Eigenschaften einer cholesterischen Mesophase zeigen. Von besonderer Bedeutung ist, dass es durch Ausbildung solcher Netzwerke gelingt, den Farbflopeffekt, also die Eigenschaft eines cholesterischen Flüssigkristalles, je nach Betrachtungswinkel unter einer anderen Farbe zu erscheinen, zu stabilisieren. Dadurch wird die Herstellung von cholesterischen Effekt- oder Farbfloppigmenten wesentlich vereinfacht.

Cholesterische Pigmente sind formanisotrope, plättchenförmige Teilchen, die über mehrere Prozeßschritte aus der photovernetzbaren, cholesterischen Ausgangsmischung hergestellt werden. Diese Ausgangsmischung muß in ihrer Mesophase in einen orientierten Film überführt und durch anschließende UV-Polymerisation fixiert werden. Gleichzeitig wird in diesem Schritt auch die Dicke der plättchenförmigen Partikel festgelegt. Das resultierende cholesterische Netzwerk muß dann in einem weiteren Prozeßschritt zu Pigmentpartikeln gemahlen werden.

Cholesterische Farbfloppigmente unterschiedlicher Zusammensetzung sind bereits bekannt. Farbfloppigmente auf Siloxanbasis werden z.B. in der EP-A-0 601 483 beschrieben. Dazu wurden cyclische Siloxane, die sowohl chirale als auch mesogene Seitengruppen tragen, über an den mesogenen Seitengruppen befindliche Acrylat- oder Methacrylateinheiten vernetzt und zu Pigmenten verarbeitet.

Aus der WO-A-97/27252 sind Farbfloppigmente bekannt, welche durch Polymerisation von Gemischen aus einem chiralen flüssigkristallinen polymerisierbaren Monomer, einem achiralen flüssigkristallinen polymerisierbaren Monomer und einer chiralen Verbindung, und einem polymeren Bindemittel und/oder einer monomeren, polymerisierbaren Verbindung und/oder einem Dispergierhilfsmittel zugänglich sind. Ein verbessertes Verfahren zur Herstellung von Farbfloppigmenten sowie zahlreiche verschiedene Typen vernetzbarer cholesterischer Gemische sind in der WO-A-99/11733 beschrieben. Geeignete achirale flüssigkristalline polymerisierbare Monomere besitzen dabei die allgemeine Formel

Z-Y-A-Y-M-Y-A-Y-Z

worin M für eine mesogene Gruppe, A für eine Spacergruppe, Y für verschiedene Brückengruppen und Z für eine polymerisierbare Endgruppe steht. Bevorzugte Reste Z sind dabei Acrylatreste. Jedes Monomer weist dabei bevorzugt zwei polymerisierbare Gruppen Z auf.

Aus der EP-A-0 675 186 sind photovernetzbare Flüssigkristalle bekannt, welche je Molekül vier vernetzbare Gruppen enthalten. Die Verbindungen besitzen folgende allgemeine Formel 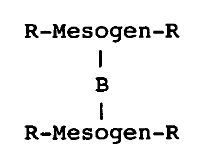 worin das Mesogen eine linear aufgebaute dreikernige Gruppe darstellt, B eine die beiden Mesogene verbindende Brücke bedeutet und R jeweils einen vernetzbaren Rest darstellt. Das Mesogen umfasst bevorzugt drei verbrückte p-Phenylengruppen und die vernetzbaren Reste R sind jeweils endständig in p-Position angeordnet. Diese Verbindungen werden zur Herstellung optischer Bauelemente verwendet. Ihre Brauchbarkeit zur Herstellung von vernetzten cholesterischen Effektpigmenten wurde nicht untersucht. Nachteilig ist bei diesen Verbindungen, dass die erzielbare Vernetzungsdichte pro Mesogen-Einheit gering ist.

Aufgabe der vorliegenden Erfindung ist daher die Bereitstellung verbesserter vernetzbarer achiraler flüssigkristalliner Monomere, insbesondere solcher, welche die Herstellung flüssigkristalliner Polymere mit höherer Vernetzungsdichte ermöglichen. Diese Aufgabe wurde überraschenderweise gelöst durch Bereitstellung von flüssigkristallinen Verbindungen der Formel (I) 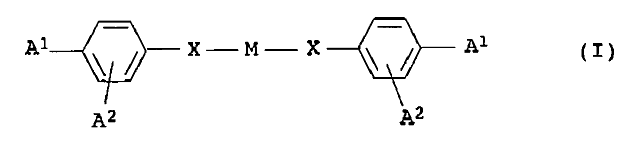 worin
die Reste X gleich oder verschieden, vorzugsweise gleich, sind und jeweils für eine Einfachbindung, -O-, -S-, -C=N-, -O-CO-, -CO-O-, -O-CO-O-, -CO-NR-, -NR-CO-, -NR-, -O-CO-NR, -NR-CO-O-, -CH₂-O- oder -NR-CO-NR stehen, worin R für H oder C₁-C₄-Alkyl steht;
- M: für eine mesogene Gruppe steht; und
- A¹ und A²: gleich oder verschieden sind und unabhängig voneinander jeweils für eine Gruppe der Formel

Z-X-(Sp)ₙ-
stehen, worin
- Z: für einen vernetzbaren Rest steht, der ausgewählt ist unter
H₂C=CH-, HC≡C-, 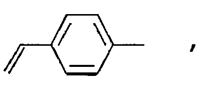 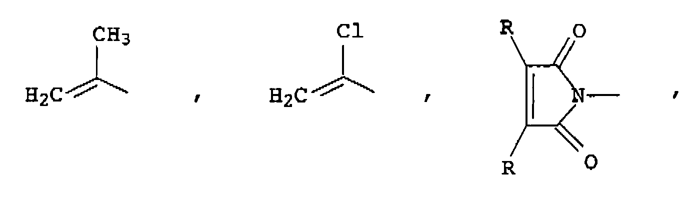 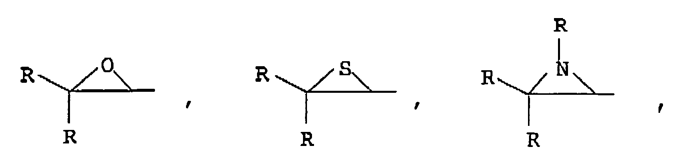 -N=C=O, -N=C=S und - O -C ≡ N,
wobei die Reste R unabhängig voneinander für C₁-C₄-Alkyl, wie z.B. Methyl, Ethyl, n- oder i-Propyl oder n-, i- oder t-Butyl stehen;
- x: eine der oben angegebenen Bedeutungen besitzt;
- Sp: ausgewählt ist unter
-(CH₂)ₚ-, -(CH₂CH₂O)ₘCH₂CH₂-, -CH₂CH₂SCH₂CH₂-, -CH₂CH₂NHCH₂CH₂-, 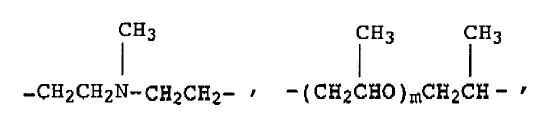 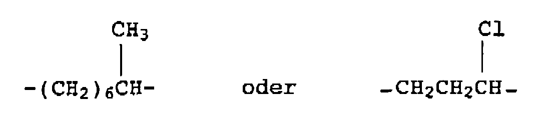 wobei m für 1 bis 3 und p für 1 bis 12 steht; und
- n: für 0 oder 1 steht.

Die erfindungsgemäßen Verbindungen der Formel I zeichnen sich dadurch aus, dass sie einerseits zur Ausbildung einer flüssigkristallinen Phase befähigt sind und diese aufgrund des erhöhten Anteils an vernetzbaren Gruppen besonders gut und dauerhaft stabilisieren können.

Ein bevorzugter Gegenstand der Erfindung betrifft Verbindungen der allgemeinen Formel I, wobei sich A² jeweils in ortho-Stellung zu A¹ befindet.

Vorzugsweise besitzen A¹ und A² die gleiche Bedeutung.

Gemäß einer weiteren bevorzugten Ausführungsform ist M ausgewählt unter Gruppen der allgemeinen Formel II: 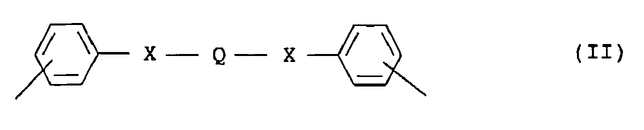 worin
- X: die oben angegebenen Bedeutungen besitzt, und
- Q: für gegebenenfalls substituiertes Alkylen, wie z.B. lineares oder verzweigtes C₁-C₁₂-Alkylen, oder eine gegebenenfalls substituierte aromatische Brückengruppe steht.

Bevorzugte aromatische Brückengruppen sind ausgewählt unter 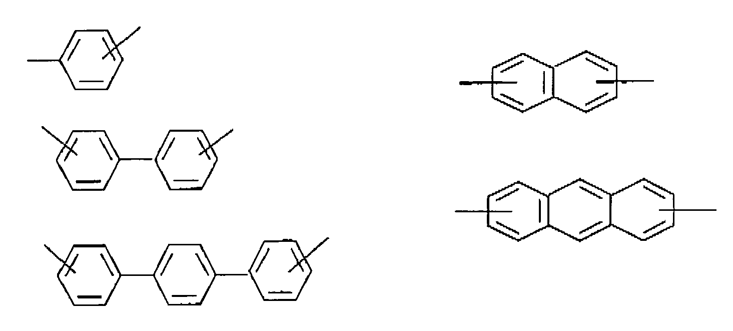 und den substituierten Analoga davon. Substituierte Analoga dieser Brückengruppen können pro aromatischem Ring 1 bis 4 gleiche oder verschiedene Substituenten, vorzugsweise einen oder zwei Substituenten je Ring oder je Brückengruppe tragen. Geeignete Substituenten sind ausgewählt unter C₁-C₄-Alkyl gemäß obiger Definition, Nitro, Halogen, wie F, Cl, Br, I, Phenyl oder C₁-C₄-Alkoxy, wobei der Alkylrest wie oben definiert ist.

Die Erfindung betrifft auch ein Verfahren zur Herstellung von Verbindungen der allgemeinen Formel I, bei dem man eine Verbindung der Formel III 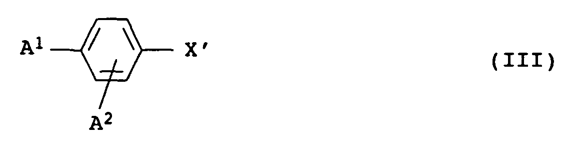 worin A¹ und A² die oben angegebenen Bedeutungen besitzen und X' für eine reaktive Seitengruppe steht, mit einer Mesogen-Verbindung der allgemeinen Formel IV

X"- M- X" (IV)

worin M die oben angegebenen Bedeutungen besitzt und X" für eine reaktive Seitengruppe steht, umsetzt, wobei X' und X" so gewählt sind, daß sie zusammen zur Ausbildung der Gruppe X befähigt sind.

Die Erfindung betrifft insbesondere ein Verfahren, bei dem man ein Mesogen der Formel IV, worin X" für OH steht mit einer Verbindung der Formel III, worin X' für -COOH oder -COHal mit Hal = F, Cl, Br oder I steht, umsetzt.

Die Erfindung betrifft ferner eine Zusammensetzung enthaltend wenigstens eine Verbindung der Formel I und gegebenenfalls weitere Bestandteile, ausgewählt unter cholesterischen, gegebenenfalls vernetzbaren Verbindungen, anorganischen Pigmenten, Farbmitteln, Photoinitiatoren, Verlaufshilfsmitteln, UV-Stabilisatoren, Bindemitteln und gegebenenfalls polymerisierbaren Verdünnungsmitteln oder Trägern.

Bevorzugt verwendete cholesterische Verbindungen sind z.B. chirale Verbindungen der allgemeinen Formeln Xa, b, c und d

(Z-X⁵)ₙCh (Xa), (Z-X²-Sp-X⁵)ₙCh (Xb),

(P¹-X⁵)ₙCh (Xc) (Z-X²-Sp-X³-M-X⁴)ₙX (Xd),

worin
- Z: die oben angegebenen Bedeutungen besitzt,
- Sp: für einen Spacer gemäß obiger Definition steht,
- X², X³ und X⁴: unabhängig voneinander für eine chemische Einfachbindung, -O-, -S-, -O-CO-, -CO-O-, -O-CO-O-, -CO-NR-, -NR-CO-, -O-CO-NR-, -NR-CO-O- oder -NR-CO-NR stehen, wobei mindestens eine der Gruppen X³ und X⁴ -O-CO-O-, -O-CO-NR-, -NR-CO-O- oder -NR-CO-NR- bedeutet, und R für C₁-C₄-Alkyl steht;
- X⁵: die für X², X³ und X⁴ angegebenen Bedeutungen besitzt oder für -CH₂-O-, -O-CH₂-, -CH=N-, -N=CH- oder -N≡N- steht,
- M: für eine mesogene Gruppe gemäß obiger Definition steht,
- P¹: für einen Rest, ausgewählt unter Wasserstoff, C₁-C₃₀-Alkyl, C₁-C₃₀-Acyl, C₃-C₈-Cycloalkyl, gegebenenfalls substituiert durch ein bis drei C₁-C₆-Alkyl und wobei die Kohlenstoffkette der Alkyl-, Acyl- und Cycloalkylreste durch Sauerstoff in Etherfunktion, Schwefel in Thioetherfunktion oder durch nichtbenachbarte Imino- oder C₁-C₄-Alkyliminogruppen unterbrochen sein kann, steht,
- n: für eine Zahl von 1 bis 6 steht und
- Ch: ein n-wertiger chiraler Rest ist.

Reste Ch sind beispielsweise 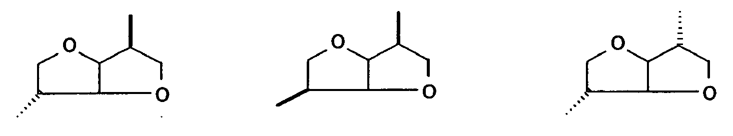 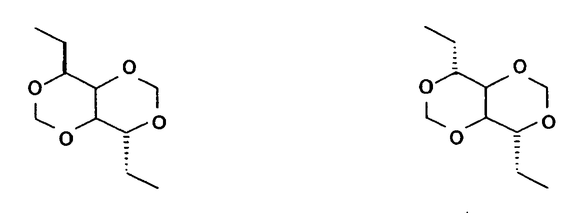 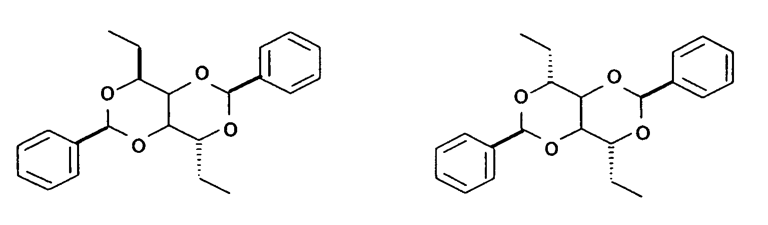 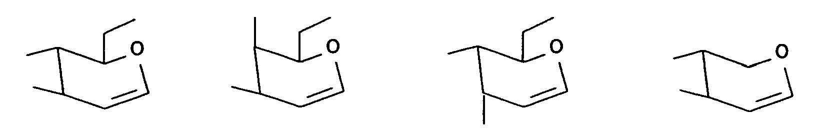 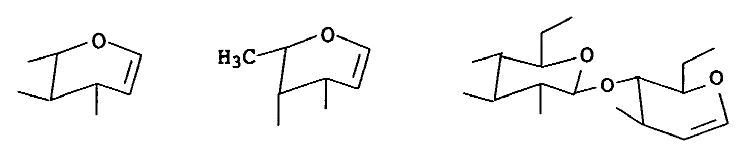 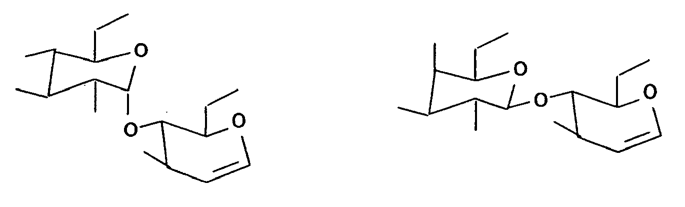 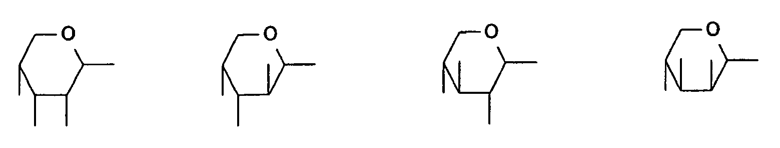 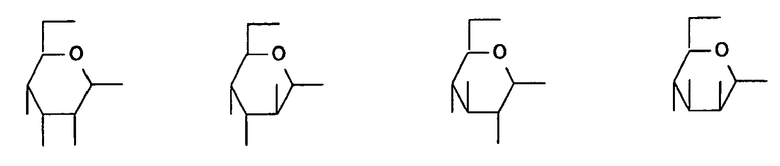 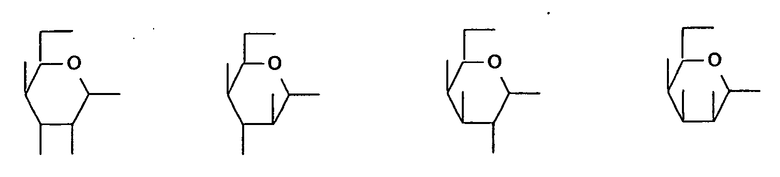 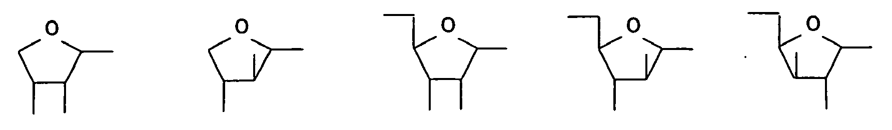 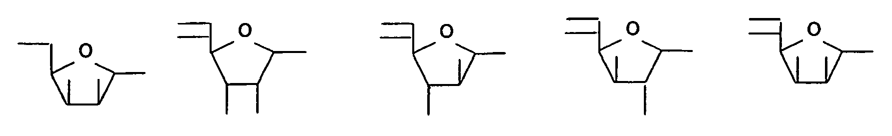 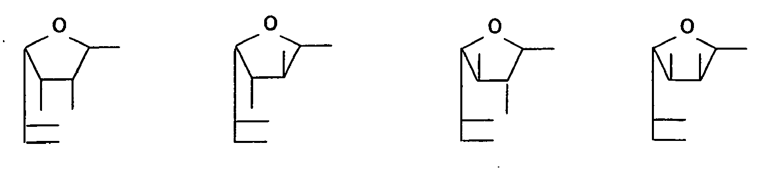 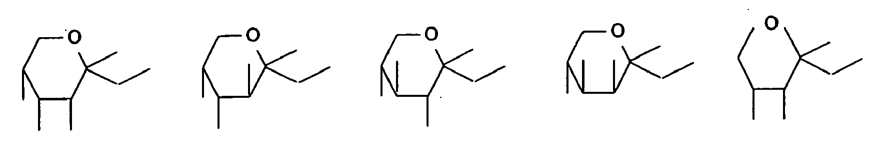 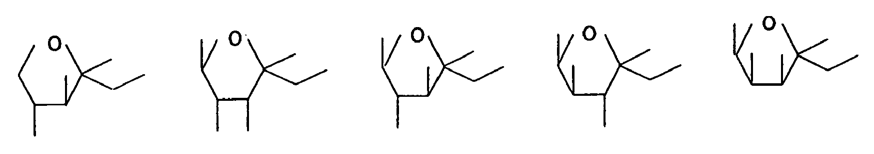 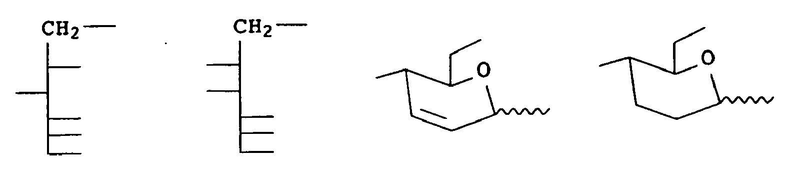 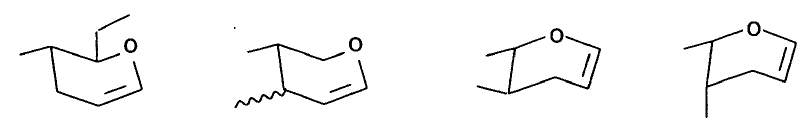 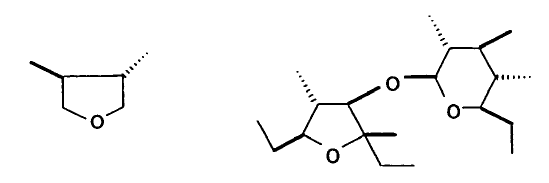 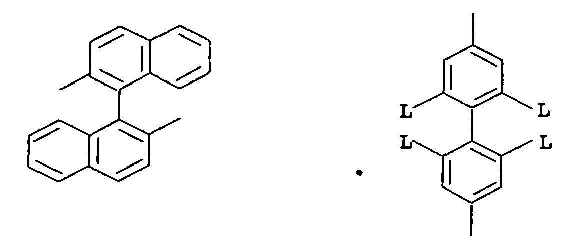 wobei
- L: C₁- bis C₄-Alkyl, C₁-C₄-Alkoxy, Halogen, COOR, OCOR, CONHR oder NHCOR ist und R C₁-C₄-Alkyl bedeutet.
(Die endständigen Striche in den aufgeführten Formeln geben die freien Valenzen an).

Besonders bevorzugt sind z. B.

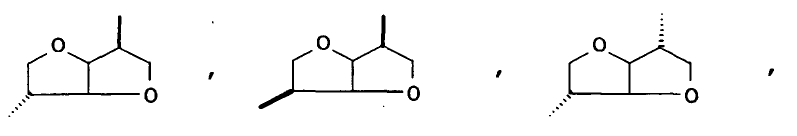

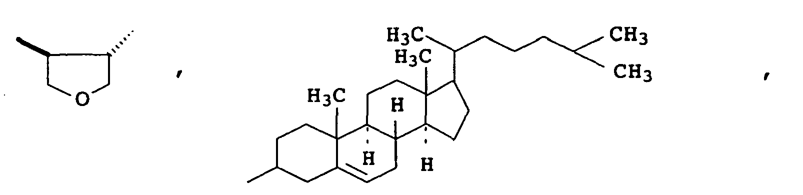

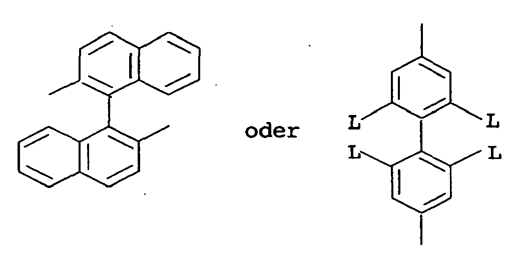

Diese und weitere bevorzugte chirale Komponenten sind beispielsweise in der DE-A 43 42 280 und in den älteren deutschen Patentanmeldungen 19520660.6 und 19520704.1 genannt.

Eine weitere bevorzugt verwendete Gruppe umfasst chirale Verbindungen der Formel Xb oder Xd, worin
- n: gleich 2 ist,
- Z¹: für H₂C=CH- steht und
- Ch: für einen chiralen Rest der Formel 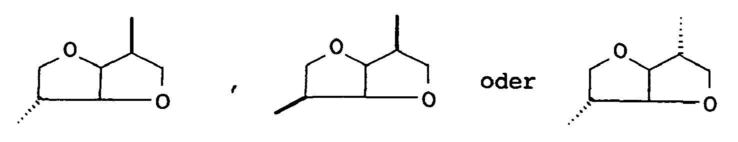 steht und
Sp, X², X³, X⁴, X⁵ und M wie oben definiert sind.

Besonders bevorzugte chirale Komponenten sind folgende Verbindungen (A) bis (G):

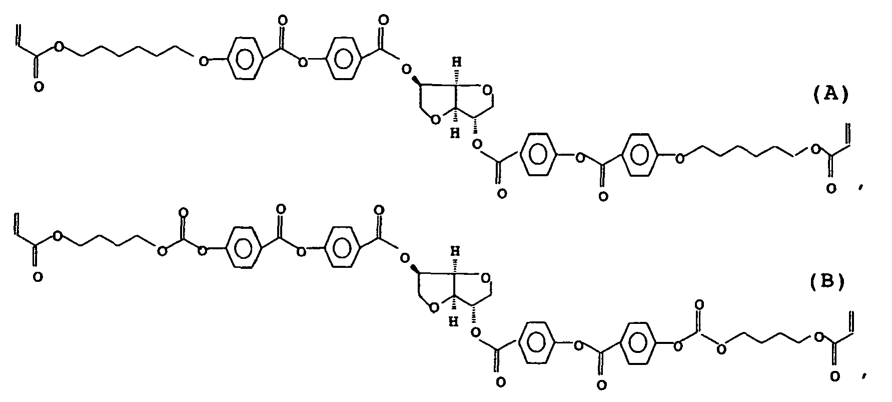

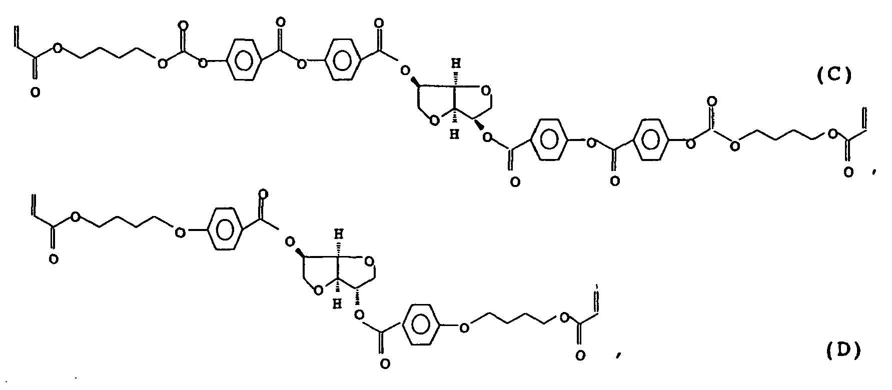

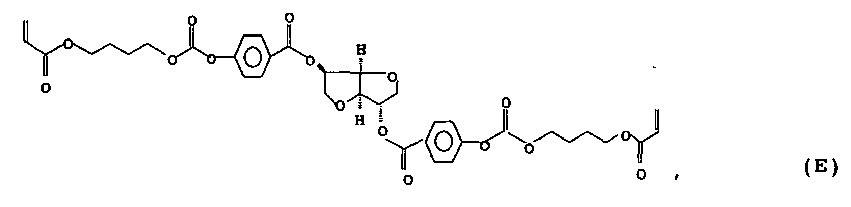

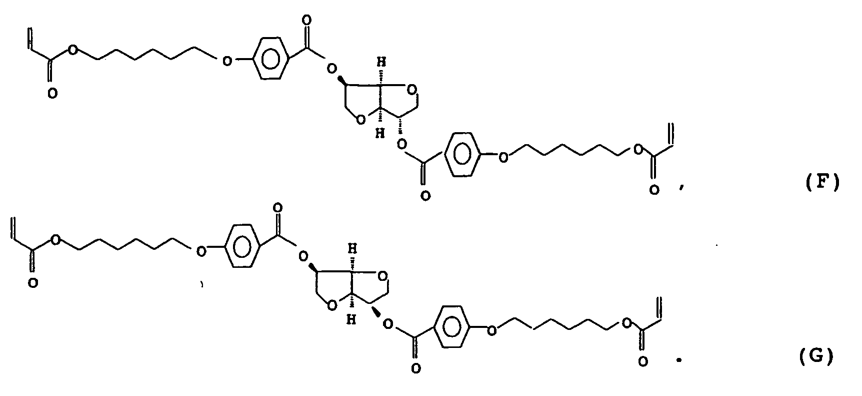

Werden die nichtchiralen Verbindungen der Formel I in Kombination mit obigen chiralen Verbindungen verwendet, so liegt das molare Verhältnis von nichtchiraler Verbindung der Formel I zu chiraler Verbindung der Formel Xa, b, c oder d im Bereich von etwa 1:0,01 bis 1:0,3, insbesondere 1:0,01 bis 1:0,25.

Polymerisiert man die erfindungsgemäßen Verbindungen oder Flüssigkristallzusammensetzungen, so lässt sich der flüssigkristalline Ordnungszustand fixieren. Die Polymerisation kann je nach polymerisierbarer Gruppe z.B. thermisch oder photochemisch erfolgen. Zusammen mit den erfindungsgemäßen Verbindungen oder Flüssigkristallzusammensetzungen lassen sich dabei auch andere Monomere copolymerisieren. Diese Monomeren können andere polymerisierbare flüssigkristalline Verbindungen, chirale Verbindungen, die ebenfalls bevorzugt kovalent einpolymerisiert werden, oder übliche Vernetzungsmittel wie mehrfachvalente Acrylate, Vinylverbindungen oder Epoxide sein. Besonders im Fall von Isocyanaten, Isothiocyanaten oder Epoxiden als polymerisierbare Flüssigkristallverbindungen ist das Vernetzungsmittel bevorzugt ein mehrfachvalenter Alkohol, so dass beispielsweise Urethane gebildet werden können. Das Vernetzungsmittel muss in seiner Menge so an die Polymerisationsverhältnisse angepasst werden, dass einerseits eine zufriedenstellende mechanische Stabilität erreicht wird, andererseits aber das flüssigkristalline Phasenverhalten nicht beeinträchtigt wird. Die Menge des Vernetzungsmittels hängt daher von der speziellen Anwendung der Polymerisate ab. Zur Herstellung von Pigmenten ist eine größere Menge Vernetzungsmittel vorteilhaft, zur Herstellung thermoplastischer Schichten oder z.B. für Display-Orientierungsschichten ist eine geringere Menge Vernetzungsmittel erforderlich. Die Menge des Vernetzungsmittels kann durch wenige Vorversuche ermittelt werden.

Eine weitere Modifizierung der aus den erfindungsgemäßen Verbindungen oder Flüssigkristallzusammensetzungen hergestellten Polymerisationsprodukte ist durch die Zugabe polymerer Hilfsstoffe vor der Polymerisation möglich. Solche Hilfsstoffe sollten vorzugsweise entweder in den Ausgangsmischungen löslich sein oder aber in einem mit den Ausgangsmischungen verträglichen organischen Lösungsmittel. Typische Vertreter solcher polymerer Hilfsstoffe sind z.B. Polyester, Celluloseester, Polyurethane sowie polyether- oder polyestermodifizierte oder auch unmodifizierte Silikone. Die für den gewünschten Zweck gegebenenfalls zuzugebende Menge an polymerem Hilfsstoff, seine chemische Natur sowie möglicherweise noch Menge und Art eines Lösungsmittels sind dem Fachmann in der Regel geläufig oder lassen sich ebenfalls experimentell durch wenige Vorversuche ermitteln.

Neben den Verbindungen der Formeln I und Xa bis d können noch weitere Verbindungen zugemischt werden, welche nichtkovalent in das polymere Netzwerk eingebaut werden. Dies können beispielsweise kommerziell erhältliche nematische Flüssigkristalle sein.

Weitere Zusatzstoffe können auch Pigmente, Farbstoffe, Füllstoffe, Stabilisatoren wie insbesondere UV-Stabilisatoren, Verlaufshilfsmittel, Photoinitiatoren, Dispergiermittel und dergleichen sein.

Bei den Pigmenten können dies sein anorganische Verbindungen wie beispielsweise Eisenoxide, Titanoxid und Ruß, bei den organischen Verbindungen z.B. Pigmente oder Farbstoffe aus den Klassen der Monoazopigmente, Monoazofarbstoffe sowie deren Metallsalze, Disazopigmente, kondensierte Disazopigmente, Isoindolinderivate, Derivate der Naphthalin- oder Perylentetracarbonsäure, Anthrachinonpigmente, Thioindigoderivate, Azomethinderivate, Chinacridone, Dioxazine, Pyrazolochinazolone, Phthalocyaninpigmente oder basische Farbstoffe wie Triarylmethanfarbstoffe und deren Salze.

Ein weiterer Gegenstand der Erfindung betrifft Pigmente, enthaltend wenigstens eine Verbindung der Formel I in vernetzter Form. Die erfindungsgemäßen Verbindungen der Formel I lassen sich in Kombinationen mit herkömmlichen chiralen Verbindungen, insbesondere Verbindungen obiger Formel Xa bis d, in an sich bekannter Weise zu cholesterischen Effektpigmenten verarbeiten. Dazu wird in an sich bekannter Weise ein vernetzbares Gemisch dieser Verbindungen auf einen Träger, z.B. durch Spritzen, Rollen, Rakeln, Walzen, Drucken oder Gießen aufgebracht, die cholesterische Phase ausgebildet, d.h. orientiert, vernetzt und gegebenenfalls getrocknet. Die so gebildete cholesterische Effektschicht kann dann in an sich bekannter Weise vom Träger entfernt werden, wobei die anfallenden Flocken dann gegebenenfalls weiter zerkleinert und klassiert werden. Bevorzugt verarbeitet man gießfähige Gemische in Gießvorrichtungen und unter Bedingungen, wie sie z.B. in der WO-A-99/11733 beschrieben sind, worauf hiermit ausdrücklich Bezug genommen wird.

Die Schichtdicke der plättchenförmigen Pigmente beträgt dabei 0,5 bis 20 µm, insbesondere 0,5 bis 10 µm, wie z.B. 0,5 bis 3 µm.

Der Durchmesser der erfindungsgemäßen Pigmente beträgt etwa 1 bis 500 µm, insbesondere etwa 3 bis 100 µm oder 3 bis 30 µm und etwa das 2- bis 20-fache der Pigmentdicke.

Die Pigmente können auch als Mehrschichtpigmente mit einer oder mehreren cholesterischen Schichten, einer oder mehreren Absorberschichten oder einer oder mehreren pigmentierten Absorberschichten ausgebildet sein. Diese sind beispielsweise nach den in der WO-A-99/11719, WO-A-99/11733 oder PCT/EP 99/03106 beschriebenen Verfahren zugänglich, worauf hiermit ausdrücklich Bezug genommen wird.

Ein weiterer Gegenstand der Erfindung betrifft eine Beschichtungsmasse enthaltend eine Zusammensetzung oder ein Pigment gemäß obiger Definition. Bevorzugte Beschichtungsmassen sind insbesondere Farben und Lacke, welche neben den erfindungsgemäßen Pigmenten oder Zusammensetzungen üblicherweise in Farben und Lacken verwendete Zusätze, insbesondere polymere Bindemittel, Dispergiermittel und Verdünnungsmittel enthalten. Geeignete Zusätze sind dem Fachmann bekannt und z.B. in der WO-A-99/11733 beschrieben worauf hiermit ausdrücklich Bezug genommen wird.

Die Erfindung betrifft die Verwendung einer erfindungsgemäßen Verbindung zur Herstellung von optischen Elementen, wie insbesondere Filtern und Polarisatoren, Beschichtungsmassen, Effektfolien, kosmetischen Mitteln und ein- oder mehrschichtigen cholesterischen Effektpigmenten.

Als optische Elemente im Sinne der Erfindung sind alle Gegenstände gemeint, welche die optischen Eigenschaften nematischer und/oder cholesterischer Flüssigkristalle ausnutzen. Im Einzelnen können dies auswahlsweise Verzögerungsfolien, Notch-Filter, Farbfilter für Displays, Polarisatoren, aber auch einfach Spiegel für dekorative Zwecke sein. Die dreidimensionale Gestalt der optischen Elemente kann planar, aber auch konkav oder konvex gekrümmt sein. Als besondere Ausführungsform können die polymerisierten Filme auch zu Pigmenten zerkleinert und nach Einarbeitung in übliche Bindemittel über übliche Auftragsverfahren, wie Spritzen, Walzen, Gießen, Sprühen, Rakeln oder Drucken auf einen Träger aufgebracht werden. Bevorzugte Ausführungsform der optischen Elemente ist eine planare Gestalt.

Wesentlich für die Qualität der optischen Elemente ist die Applikation der Verbindungen der allgemeinen Formel I beziehungsweise Mischungen, welche Verbindungen der allgemeinen Formel I enthalten, da über die Applikationsmethode die optische Qualität der Schichten bestimmt wird. Als Applikationsmethoden eignen sich allgemein Spritzen, Rollen, Walzen, Gießen, Rakeln und Drucken.

Eine bevorzugte Ausführungsform ist hierbei das Auflösen des flüssigkristallinen Materials in einem leichtflüchtigen Lösungsmittel in Kombination mit gegebenenfalls notwendigen Additiven. Als Lösungsmittel kommen hierbei THF, MEK, Toluol, Ethylacetat, Butylacetat in Frage. Als Additive können Polymerisationsinhibitoren beziehungsweise -initiatoren, Verlaufshilfsmittel, Entlüfter, Haftmittel etc. eingesetzt werden. Die isotrope Lösung wird über ein übliches Auftragswerk auf ein Substrat übertragen. Nach Durchlaufen eines Trockenkanals, wobei das Lösungsmittel entfernt wird, kann der nasse Film mit Hilfe von UV-Strahlung fixiert werden. Die erhaltenen Filme zeigen eine sehr hohe Reflektivität. Diese Filme eignen sich hervorragend als Polarisatoren in LC-Displays. In einer Ausführungsform werden hierzu über Kaschierprozesse mehrere Schichten solcher Filme übereinanderkaschiert und man kann über geeignete Auswahl von Selektivwellenlängen der gewählten Filme einen Polarisator erhalten, welcher das gesamte Licht des sichtbaren Spektrums abdeckt (EP 0 720 041).

Auch Farbfilter lassen sich mit Mischungen herstellen, welche Verbindungen der allgemeinen Formel I enthalten. Hierzu können gezielt die benötigten Wellenlängen über dem Fachmann gebräuchliche Auftragsverfahren aufgebracht werden. Eine alternative Auftragsform nutzt die Thermochromie cholesterischer Flüssigkristalle. Durch Einstellung der Temperatur lässt sich die Farbe der cholesterischen Schicht von Rot über Grau nach Blau verschieben. Mit Hilfe von Masken lassen sich gezielt bestimmte Zonen bei definierter Temperatur polymerisieren. Entscheidende Einflussgröße für die Thermochromie und Händigkeit der cholesterischen Mischung, welche Verbindungen der Formel I enthält, ist die Auswahl des chiralen Hilfsstoffs. Er bestimmt die Händigkeit des reflektierten Lichts wie auch die Thermochromie des cholesterischen Systems.

Neben den optischen Eigenschaften von cholesterischen Phasen, welche Verbindungen der allgemeinen Formel I enthalten, eignet sich auch die nematische Phase dieser Substanzen für die Anwendung in optischen Elementen. Ausgenutzt wird hierbei die Doppelbrechung eines solchen Systems. Angesprochen seien hier vor allem Verzögerungsfolien.

Im Folgenden wird die Erfindung anhand einer detaillierten Beschreibung der Synthese bevorzugter Mesogendiole und anschließender Synthese bevorzugter erfindungsgemäßer flüssigkristalliner polymerisierbarer Monomere der Formel I näher erläutert.

### A. Synthese der Mesogendiole

### 1. Synthese zweikerniger Mesogendiole

Die Synthese von 2,2'-Dimethyl-4,4'-dihydroxybiphenyl (1a) erfolgt unter Anwendung bekannter Verfahren (Percec et al., Macromolecules (1996) 29, 3727; Colon, J. et al., J. Org. Chem (1986) 51, 2627) nach folgendem Reaktionsschema 1:

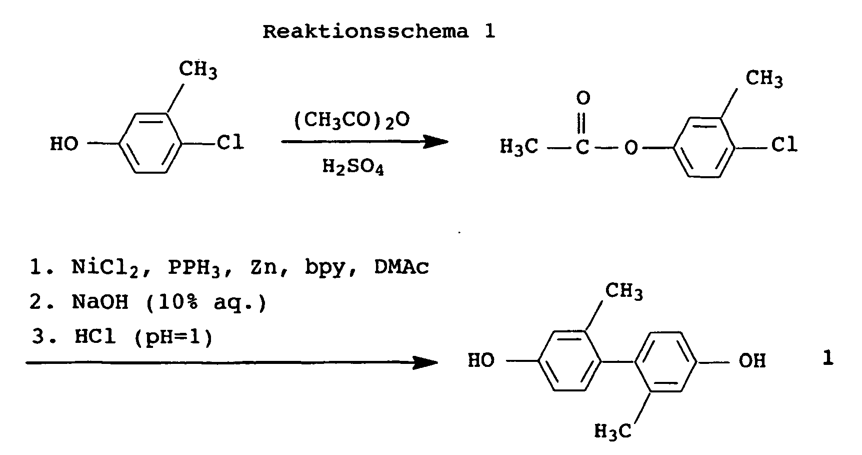

Nach der Acetylierung von 4-Chlor-3-methylphenol wird das acetylierte Produkt durch eine Ni(0)-Kopplungsreaktion zu 2,2'-Dimethyl-4,4'-diacetyloxybiphenyl umgesetzt. Die Acetylgruppe wird durch basische Hydrolyse entfernt und 2,2'-Dimethyl-4,4'-dihydroxybiphenyl durch Zugabe von Salzsäure aus dem Phenolat freigesetzt. Die Aufreinigung erfolgt durch Vakuumdestillation und anschließende Umkristallisation aus Toluol. Das Mesogendiol kann nach der Aufreinigung in einer Ausbeute von 61% erhalten werden.

### 2. Synthese dreikerniger Mesogendiole

Die dreikernigen Mesogendiole sind aus einer mittelständigen Hydrochinoneinheit, sowie zwei endständigen 4-Hydroxybenzoesäureeinheiten aufgebaut. Sie besitzen folgende Struktur:

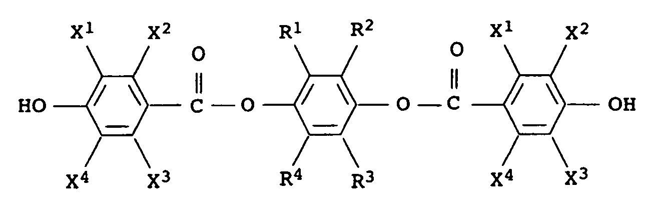

Sowohl die Hydrochinoneinheit, als auch die beiden 4-Hydroxybenzoesäureeinheiten können einen oder mehrere Substituenten R¹-R⁴ beziehungsweise X¹-X⁴ tragen.

Zur Synthese dreikerniger Mesogendiole können prinzipiell zwei Wege beschritten werden. Die Auswahl der Syntheseroute hängt dabei insbesondere von dem Substitutionsmuster der mittelständigen Hydrochinoneinheit ab, das die Syntheseroute zur Darstellung des dreikernigen Mesogendiols bestimmt.

Mesogendiole, die unsubstituierte oder nur methylsubstituierte Hydrochinoneinheiten beinhalten, lassen sich, wie beschrieben in der DE-A-197 16 822, gemäß folgendem Reaktionsschema 2, dargestellt am Beispiel der Synthese von 1,4-Phenylen-bis-(4-hydroxy)benzoat (2a) herstellen : 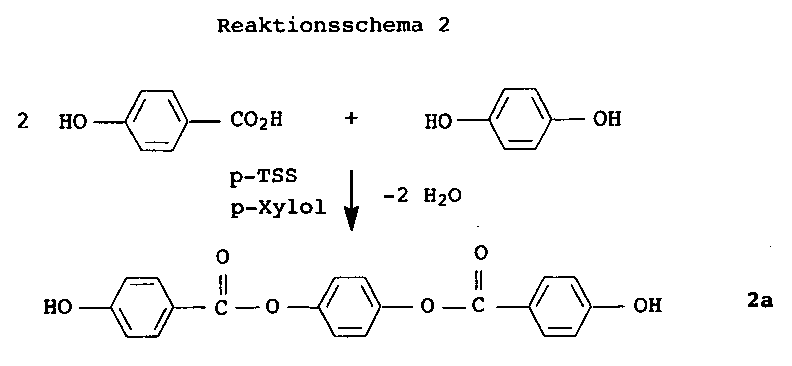 4-Hydroxybenzoesäure wird zusammen mit Hydrochinon im Molverhältnis 2:1 in p-Xylol vorgelegt. Weder 4-Hydroxybenzoesäure noch Hydrochinon sind in p-Xylol vollständig löslich. Unter Katalyse von p-Toluolsulfonsäure (p-TSS) wird das wiederum in Xylol unlösliche Dreikernmesogendiol 1,4-Phenylen-bis-(4-hydroxy)benzoat im Zuge einer azeotropen Veresterung erhalten. Die nach dieser Methode dargestellten Mesogendiole können in Ausbeuten von bis zu 85% erhalten werden.

Nach obigem Reaktionsschema werden die folgenden drei dreikernigen Mesogendiole hergestellt:

**Tabelle: Dreikernmesogendiole, die durch azeotrope Veresterung dargestellt wurden**

| |
|---|
| 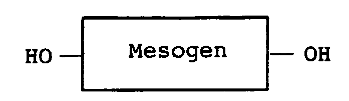 |
| 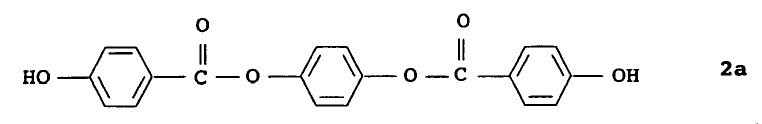 |
| 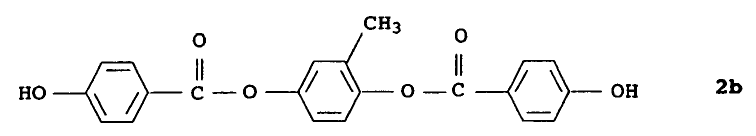 |
| 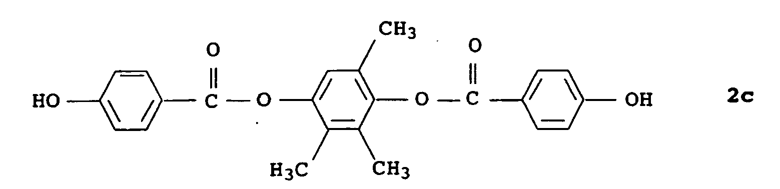 |

Dreikernige Mesogendiole, bei denen die Hydrochinoneinheit eine oder mehrere sterisch anspruchsvolle Gruppen trägt, werden bevorzugt auf andere Weise hergestellt. Zu diesen sterisch anspruchsvollen Gruppen zählen z.B. tert.-Butyl- oder Arylreste. Die Synthese derartiger Dreikernmesogendiole erfolgt nach Reaktionsschema 3, wobei beispielsweise tert.-Butylhydrochinon verwendet wird (Galli et al., Polymer Bulletin (1989) 21, 563). 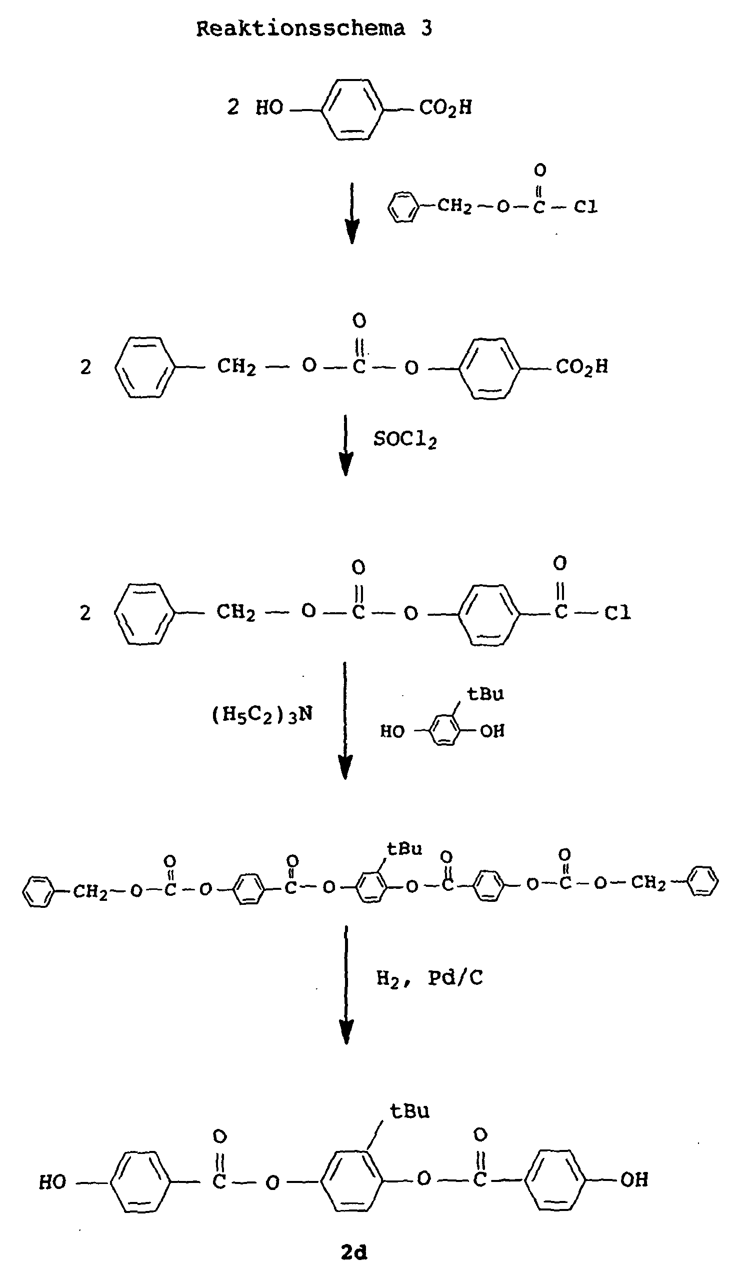 4-Hydroxybenzoesäure wird mit Chlorameisensäurebenzylester an der phenolischen Hydroxygruppe geschützt. Diese so geschützte 4-Hydroxybenzoesäure wird anschließend mit Thionylchlorid zum entsprechenden Säurechlorid umgesetzt. Aus der Reaktion des Säurechlorids mit tert-Butylhydrochinon in Gegenwart von Triethylamin als säureabfangender Base wird schließlich der hydroxygeschützte Diester erhalten. Die Schutzgruppen werden in einem abschließenden Reaktionsschritt mittels katalytischer Hydrierung an einem Palladiumkatalysator entfernt. Die nach dieser Vorschrift dargestellten Mesogendiole konnten in Ausbeuten bis 40% erhalten werden. Die niedrige Gesamtausbeute wird durch niedrige Ausbeuten bei der Darstellung der benzylgeschützten Mesogendiole bedingt. Nach diesem Reaktionsschema sind beispielsweise die in der folgenden Tabelle zusammengestellten dreikernigen Mesogendiole herstellbar.

**Tabelle: Dreikernmesogendiole, die sterisch anspruchsvolle Gruppen tragen**

| |
|---|
| 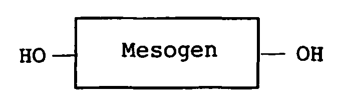 |
| 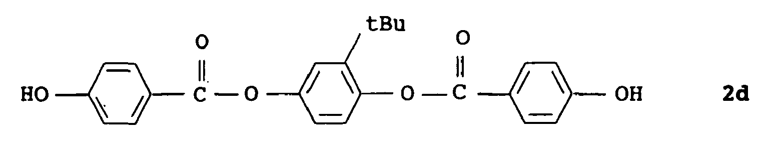 |
| 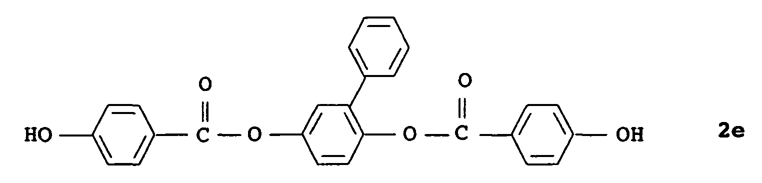 |
| 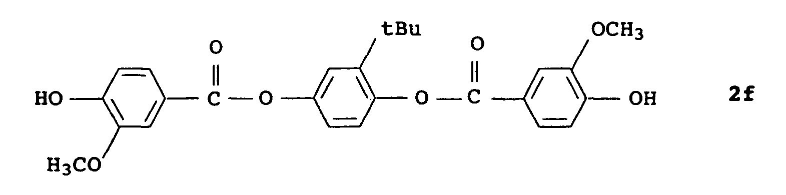 |

### 3. Synthese vierkerniger Mesogendiole

Die oben für die Synthese dreikerniger Mesogendiole beschriebenen Reaktionen lassen sich auch auf Vierkernmesogendiole übertragen. Strukturell unterscheiden sich die vierkernigen von den dreikernigen Mesogendiolen nur dadurch, dass der Mittelteil des Moleküls nicht aus einer Hydrochinoneinheit, sondern aus einer zweikernigen aromatischen Diolkomponente besteht. In der folgenden Tabelle sind Beispiele zweier erfindungsgemäß brauchbarer vierkernmesogendiole zusammengefasst. Die Herstellung erfolgte durch azeotrope Veresterung in p-Xylol unter Katalyse von p-Toluolsulfonsäure. Die Ausbeuten betrugen bis zu 77%.

**Tabelle: Vierkernmesogendiole, die durch azeotrope Veresterung dargestellt wurden**

| |
|---|
| 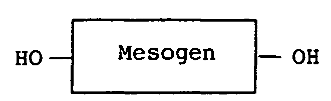 |
| 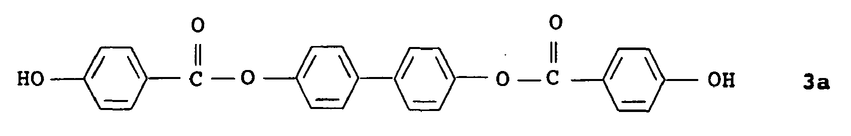 |
| 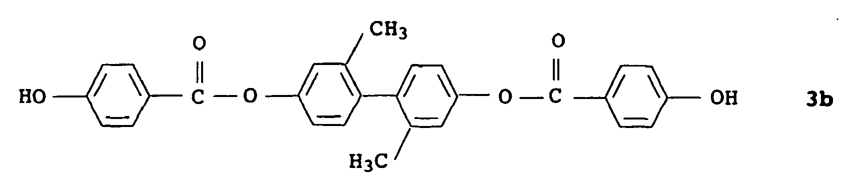 |

### B. Synthese neuer flüssigkristalliner Tetraacrylate

Bevorzugte erfindungsgemäße flüssigkristalline Tetraacrylate sind über 3,4-Di-(6-Acryloyloxyhexyloxy)benzoesäure zugänglich. 3,4-Di-(6-Acryloyloxyhexyloxy)benzoesäure wird in bekannter Weise (Stohr, Dissertation, Universität Bayreuth, 1996) synthetisiert. Die Synthese ist im folgenden Reaktionsschema 4 dargestellt:

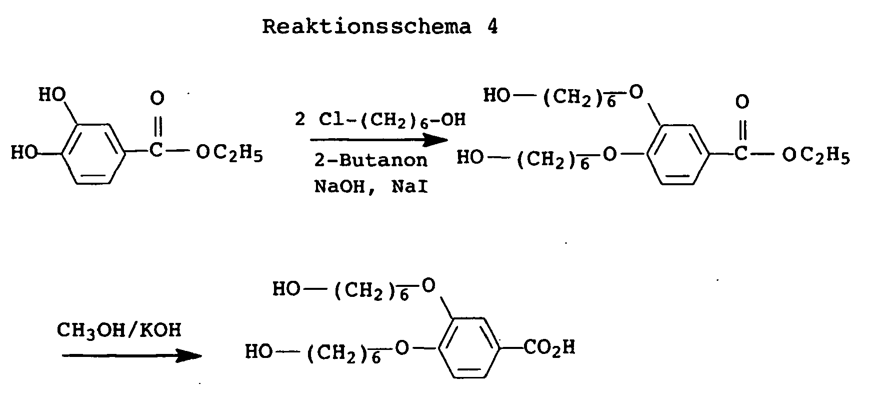

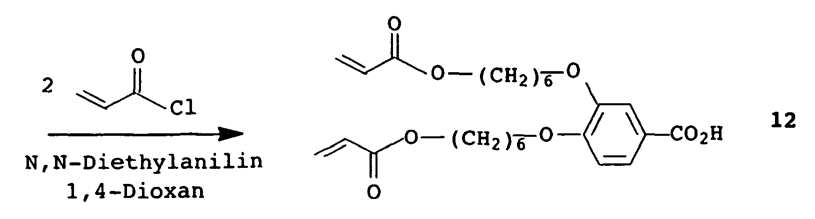

Im ersten Schritt der Synthese wird Ethyl-3,4-dihydroxybenzoat mit 6-Chlorhexanol basisch verethert. Anschließend wird der Ethylester mit methanolischer Kalilauge verseift, so dass die freie Säure isoliert werden konnte. Diese wurde dann mit Acrylsäurechlorid in 1,4-Dioxan verestert, wobei Diethylanilin als Base zum Abfangen der freigesetzten Salzsäure verwendet wurde. In einem zweiten Schritt wird dann die Säure in das Säurechlorid überführt und mit verschiedenen Mesogendiolen umgesetzt. Diese zweite Stufe ist im folgenden Reaktionsschema 5 dargestellt:

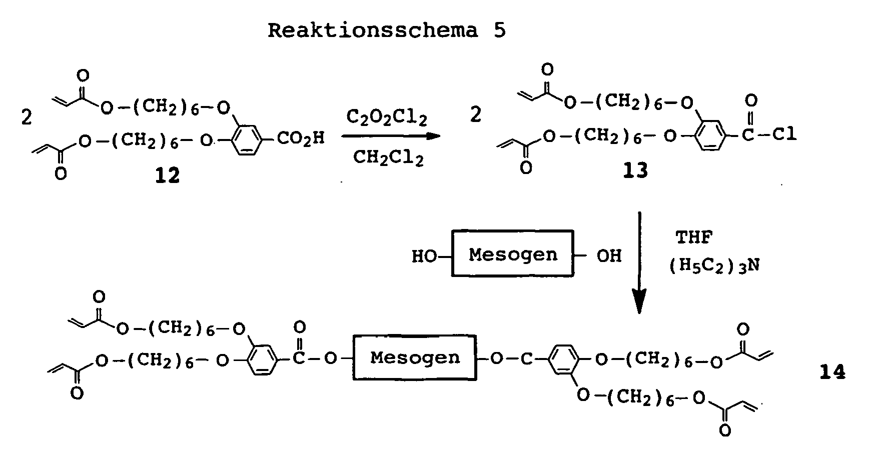

| |
|---|
| 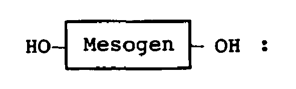 |
| 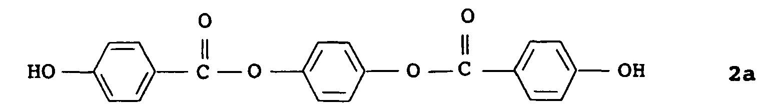 |
| 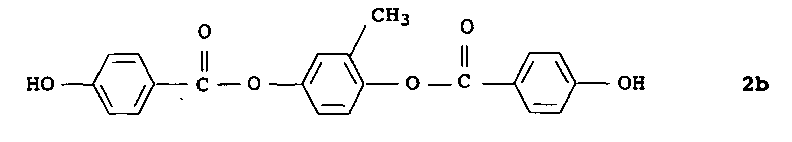 |
| 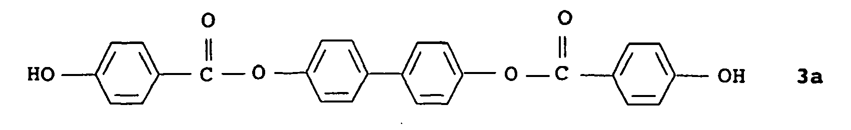 |
| 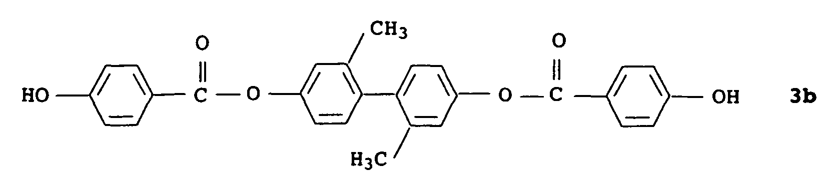 |

Dazu wurde 3,4-Di-(6-Acryloyloxyhexyloxy)benzoesäure mit Oxalylchlorid zum Säurechlorid umgesetzt. Dieses wurde anschließend, ohne weitere Aufreinigung, im Verhältnis 2:1 mit dem jeweiligen Mesogendiol in THF zur Reaktion gebracht. Triethylamin diente dabei als Base, um die bei der Veresterung entstehende Salzsäure zu binden. Alle auf diese Weise hergestellten Tetraacrylate wurden anschließend säulenchromatographisch aufgereinigt. Die Ausbeute der Tetraacrylate lag zwischen 42% und 72%.

Die nach obigem Reaktionsschema synthetisierten Tetraacrylate sind mit ihrer Struktur in der folgenden Tabelle zusammengefaßt.

Tabelle: Synthetisierte Tetraacrylate und ihr Mesophasenverhalten

| |
|---|
| 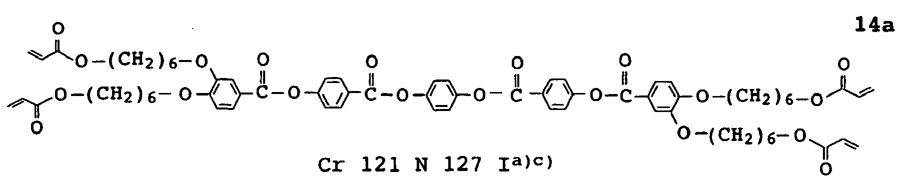 |
| 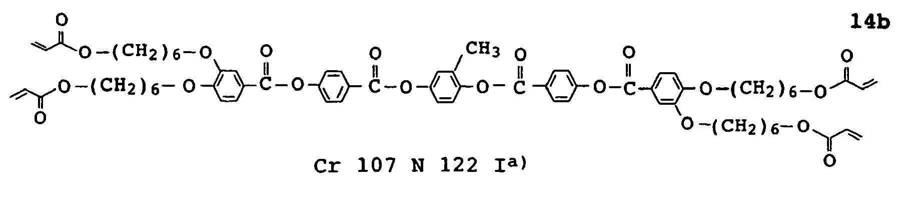 |
| 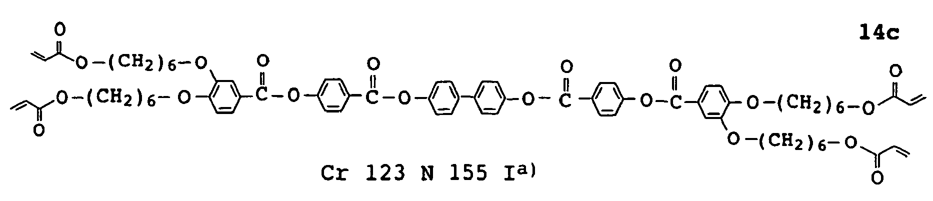 |
| 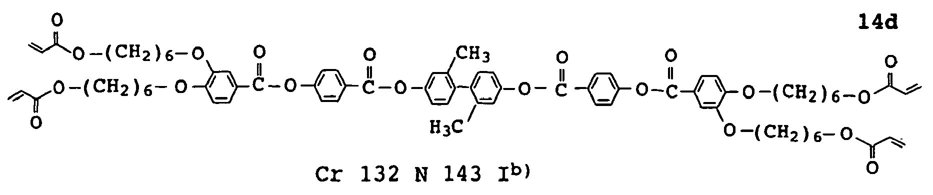 |

a) DSC, 2. Aufheizen, Inhibitorgehalt: 2 Gew.-% Schwefel, Heizrate 10 K/min
b) Polarisationsmikroskop
c) Cr = Kristallin; N = Nematisch; I = Isotrop

Das Phasenverhalten der Tetraacrylate wurde mittels DSC und Polarisationsmikroskopie untersucht. 2 Gew.-% Schwefel wurden als Inhibitor zugesetzt, um eine thermische Polymerisation während der Untersuchung zu verhindern. Bei allen vier Tetraacrylaten konnte dabei eine nematische Mesophase detektiert werden. Von den Tetraacrylaten mit fünfkerniger mesogener Einheit zeigt **14a** eine nematische Mesophase zwischen 121°C und 127°C und **14b** eine nematische Mesophase zwischen 107°C und 122°C. Die Methylsubstitution an der mesogenen Einheit setzt sowohl den Schmelzpunkt als auch den Klärpunkt im Vergleich zum unsubstituierten System **14a** herab. Dabei ist der Einfluß des Substituenten auf den Schmelzpunkt wesentlich stärker ausgeprägt, als der Einfluß auf den Klärpunkt.

Von den Tetraacrylaten mit sechskerniger mesogener Einheit zeigt **14c** eine nematische Mesophase zwischen 123°C und 155°C. Das Tetraacrylat **14d** verhält sich ebenfalls nematisch. Allerdings kann bei diesem Tetraacrylat die nematische Mesophase in der Heizkurve der DSC nicht detektiert werden, während unter dem Polarisationsmikroskop eine fluide Mesophase zwischen 132°C und 143°C zu erkennen ist. Die DSC zeigt nur in der Kühlkurve eine Mesophase mit deutlich erkennbarem Übergang zwischen isotroper und nematischer Phase. Durch die Einführung der beiden Methylgruppen wird die Phasenbreite im Vergleich mit **14c** erheblich kleiner. Interessanterweise erhöht sich der Schmelzpunkt bei Einführung von zwei Methylgruppen, während die Einführung einer Methylgruppe bei **14b** zu einer Erniedrigung des Schmelzpunktes führte. Die DSC-Messungen zeigen bei **14b** und **14c** noch zusätzliche Übergänge im kristallinen Bereich. Diese Übergänge wurden nicht weiter untersucht.

Ausgehend von obigen konkreten Anweisungen kann der Fachmann übliche Abwandlungen der konkret beschriebenen Verfahren vornehmen, um zu weiteren erfindungsgemäßen Verbindungen zu gelangen.

Die Erfindung wird nun anhand der folgenden Ausführungsbeispiele näher erläutert.

### Experimenteller Teil

### Geräte und Hilfsmittel

| | |
|---|---|
| IR-Spektroskopie: | BIO-RAD Digilab FTS-40 (FT-IR) |
| ¹H-NMR-Spektroskopie: | BRUKER AC 250 (250 MHz) |
| ¹³C-NMR-Spektroskopie: | BRUKER AC 250 (62.5 MHz) |
| DSC: | PERKIN-ELMER DSC 7 |
| Polarisationsmikroskopie: | NIKON Diaphot mit Heiztisch Mettler FP82, Steuereinheit Mettler FP90 |

### Chemikalien und Lösungsmittel

Dioxan wurde durch Erhitzen unter Rückfluß über Kalium getrocknet und unter Schutzgas abdestilliert. Tetrahydrofuran wurde erst über Kaliumhydroxid unter Rückfluß erhitzt, abdestilliert, unter Rückfluß über Kalium erneut erhitzt und schließlich unter Schutzgas abdestilliert. Methylenchlorid wurde durch Erhitzen unter Rückfluß über Calciumhydrid getrocknet und unter Schutzgas abdestilliert. Alle weiteren Lösungsmittel wurden über Füllkörperkolonnen destilliert und ohne weitere Trocknung eingesetzt. Triethylamin wurde über Kaliumhydroxid unter Rückfluß erhitzt und unter Schutzgas abdestilliert. Acrylsäurechlorid wurde durch zweifache fraktionierte Destillation unter Schutzgas mit 2,6-Di-tert.-butyl-p-kresol als Stabilisator gereinigt. Alle anderen verwendeten Chemikalien waren kommerziell in genügend hoher Reinheit erhältlich und wurden daher ohne weitere Aufreinigung eingesetzt.

### Referenzbeispiel 1: Herstellung von Mesogendiolen

Folgende Mesogendiole wurden hergestellt:

### Mesogendiole:

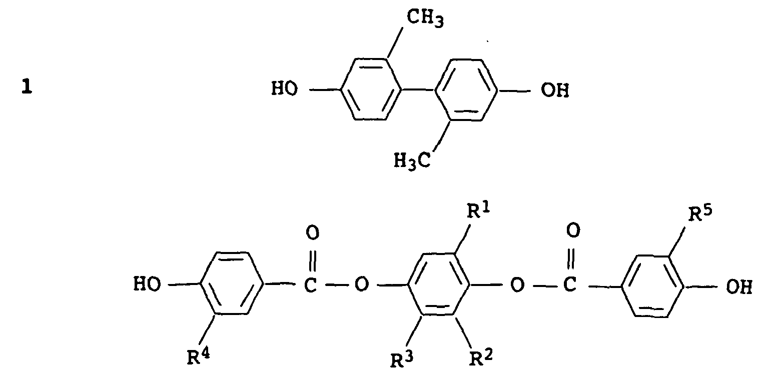

**2a** R¹ - R⁵ = -H
**2b** R¹ = -CH₃, R² - R⁵ = -H
**2c** R¹ - R³ = -CH₃, R⁴-R⁵ = -H
**2d** R¹ = -tBu, R²- R⁵ = -H
**2e** R¹ = -Phenyl, R² - R⁵ = -H
**2f** R¹ = -tBu, R²- R³ = -H, R⁴- R⁵ = -OCH₃ 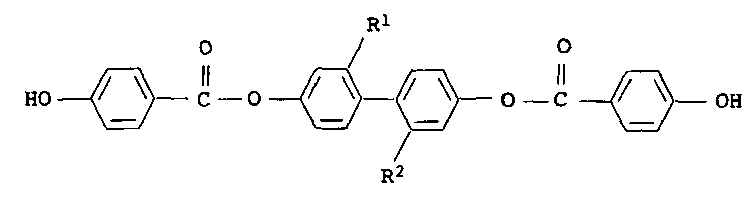
**3a** R¹, R² = -H
**3b** R¹, R² = -CH₃

### Referenzbeispiel 1.1: Herstellung von 2,2'-Dimethyl-4,4'-dihydroxybiphenyl (1)

### a) 4-Chlor-3-methyl-phenylacetat

In einem 250 ml Kolben mit Rückflußkühler werden 43.0 g (0.30 mol) 4-Chlor-3-methylphenol, 34 ml (0.36 mol) Essigsäureanhydrid und einige Tropfen konz. Schwefelsäure 2 h bei 60°C gerührt. Nach Abkühlen auf Raumtemperatur wird die Reaktionsmischung in 200 ml Wasser gegossen und 1 h bei Raumtemperatur gerührt. Anschließend extrahiert man mit 400 ml Diethylether. Die organische Phase wird über Magnesiumsulfat getrocknet und der Ether abdestilliert. Das Rohprodukt wird anschließend im Vakuum destilliert (Sdp. 65-68°C, 20 mbar).
Ausbeute: 52.5 g (95% d.Th.) als farblose Flüssigkeit
Charakterisierung:
IR (Film): ν (cm⁻¹): 3050, 2985, 2957, 2923, 1770, 1611, 1581, 1479, 1370, 1053, 1017, 899, 814, 705, 684.
¹H-NMR (CDCl₃): δ (ppm): 7.32 (d, 1H, ortho zu -Cl), 6.96 (d, 1H, ortho zu -CH₃), 6.87 (dd, 1H, para zu -CH₃), 2.35 (s, 3H, -OOC-CH₃), 2.27 (s, 3H, -CH₃).

### b) 2,2'-Dimethyl-4,4'-dihydroxybiphenyl

In einem 500 ml Kolben mit Rückflußkühler werden 2.08 g (0.016 mol) Nickeldichlorid, 20.9 g (0.080 mol) Triphenylphosphan (PPh3), 30.1 g (0.460 mol) Zinkpulver, 2.51 g (0,016 mol) 2,2'-Bipyridin (bpy) und 160 ml Dimethylacetamid (DMAc) vorgelegt. Das Reaktionsgemisch wird auf 65°C erhitzt. Nach Zugabe von 52.5 g (0.285 mol) 4-Chlor-3-methylphenylacetat wird die Reaktionsmischung 4 h bei 70°C gerührt. Nach Abkühlen auf Raumtemperatur wird die Reaktionsmischung filtriert, anschließend auf 500 ml einer 2.5-molaren Natriumhydroxidlösung gegossen und über Nacht gerührt. Nach Waschen mit 300 ml Diethylether wird die wässrige Phase mit konz. Salzsäure angesäuert (pH = 1). Die wässrige Phase wird anschließend mit 800 ml Diethylether extrahiert und der Diethylether abdestilliert. Das Rohprodukt wird im Vakuum destilliert (Sdp. 167-170°C, 0.01 mbar) und anschließend zweimal aus Toluol umkristallisiert.
Ausbeute: 18.5 g (61% d.Th.) als weißer Feststoff
Charakterisierung:
IR (KBr): ν (cm⁻¹): 3328, 3023, 2921, 1606, 1583, 1488, 1452, 1233, 1160, 814.
¹H-NMR (DMSO): δ (ppm): 9.19 (s, 2H, OH), 6.79 (d, 2H, meta zu -CH₃), 6.65 (d, 2H, ortho zu -CH₃), 6.57 (dd, 2H, para zu -CH₃), 1.89 (s, 6H, -CH₃).
¹³C-NMR (DMSO): δ (ppm): 156.26, 136.90, 132.07, 130.69, 116.50, 112.66 (Aromat), 19.98 (-CH₃).
Schmelzpunkt: 137-138°C

### Referenzbeispiel 1.2: Darstellung von Mesogendiolen mittels azeotroper Veresterung

A) Allgemeine Arbeitsvorschrift: In einem Kolben mit Wasserabscheider werden die jeweilige 4-Hydroxybenzoesäure und das jeweilige aromatische Diol zusammen mit p-Toluolsulfonsäure in p-Xylol vorgelegt und 24 h unter Rückfluß erhitzt. Nach beendigter Wasserabscheidung läßt man die Reaktionsmischung auf Raumtemperatur abkühlen und filtriert das Rohprodukt ab.
B) Nach allgemeiner Arbeitsvorschrift hergestellte Verbindungen:
a) 1,4-Phenylen-bis-(4-hydroxy)benzoat (2a)
Aufreinigung: Das Rohprodukt wird in 100 ml Ethanol aufgeschlämmt, mehrere Stunden bei Raumtemperatur gerührt und anschließend abfiltriert. Man erhält das Produkt als weißen Feststoff .

| | | | |
|---|---|---|---|
| Ansatz: | 3.30 g | (0.03 mol) | Hydrochinon |
| | 8.29 g | (0.06 mol) | 4-Hydroxybenzoesäure |
| | 0.60 g | (0.003 mol) | p-Toluolsulfonsäure |
| | 150 ml | | p-Xylol |

Ausbeute: 8.50 g (81% d.Th.) als weißer Feststoff
Charakterisierung:
IR (KBr): ν (cm⁻¹): 3380, 3069, 1693, 1611, 1593, 1514, 1286, 1166, 1081, 901, 847.
¹H-NMR (DMSO): δ (ppm): 10.54 (s, 2H, -OH), 8.00 (d, 4H, Aromat), 7.31 (s, 4H, Aromat), 6.94 (d, 4H, Aromat).
¹³C-NMR (DMSO): δ (ppm): 164.65 (-COO-), 162.699, 148.39, 132.52, 123.19, 119.49, 115.86 (Aromat).
Zersetzung (Tₒₙ): 294°C

b) 2-Methyl-1,4-Phenylen-bis-(4-hydroxy)benzoat (2b)
Aufreinigung: Das Rohprodukt wird in 100 ml Diethylether aufgeschlämmt, mehrere Stunden bei Raumtemperatur gerührt und anschließend abfiltriert. Man erhält das Produkt als weißen Feststoff.

| | | | |
|---|---|---|---|
| Ansatz: | 3.72 g | (0.03 mol) | 2-Methylhydrochinon |
| | 8.29 g | (0.06 mol) | 4-Hydroxybenzoesäure |
| | 0.60 g | (0.003 mol) | p-Toluolsulfonsäure |
| | 150 ml | | p-Xylol |

Ausbeute: 9.31 g (85% d.Th.) als weißer Feststoff
Charakterisierung:
IR (KBr): ν (cm⁻¹): 3392, 3077, 2928, 1697, 1609, 1594, 1513, 1281, 1161, 1078, 847.
¹H-NMR (DMSO): δ (ppm): 10.53 (s, 2H, -OH), 8.00 (t, 4H, Aromat), 7.17 (m, 3H, Aromat), 6.94 (dd, 4H, Aromat), 2.15 (s, 3H, Ar-CH₃).
¹³C-NMR (DMSO): δ (ppm): 164.65, 164.32 (-COO-), 163.03, 162.96, 148.33, 146.98, 132.48, 131.66, 124.37, 123.34, 120.60, 119.51, 119.31, 115.85 (Aromat), 16.01 (-CH₃).
Zersetzung (Tₒₙ): 276°C

c) 2,3,5-Trimethyl-1,4-Phenylen-bis-(4-hydroxy)benzoat (2c)
Aufreinigung: Das Rohprodukt wird in 100 ml Diethylether aufgeschlämmt, mehrere Stunden bei Raumtemperatur gerührt und anschließend abfiltriert. Anschließend wird das Rohprodukt aus 1000 ml Methanol umkristallisiert. Man erhält das Produkt als weißen Feststoff.

| | | | |
|---|---|---|---|
| Ansatz: | 4.56 g | (0.03 mol) | 2,3,5-Trimethylhydrochinon |
| | 8.29 g | (0.06 mol) | 4-Hydroxybenzoesäure |
| | 0.60 g | (0.003 mol) | p-Toluolsulfonsäure |
| | 150 ml | | p-Xylol |

Ausbeute: 6.65 g (57% d.Th.) als weißer Feststoff
Charakterisierung:
IR (KBr): ν (cm⁻¹): 3414, 1705, 1606, 1588, 1512, 1273, 1162, 1087, 848.
¹H-NMR (DMSO): δ (ppm): 10.54 (s, 2H, -OH), 8.01 (t, 4H, Aromat), 6.98 (s, 1H, Aromat), 6.94 (dd, 4H, Aromat), 2.06 (s, 3H, Ar-CH₃) 2.03 (s, 3H, Ar-CH₃), 2.02 (s, 3H, Ar-CH₃).
¹³C-NMR (DMSO): δ (ppm): 164.43, 163.94 (-COO-), 163.04, 151.80, 146.57, 145.68, 132.41, 130.30, 128.39, 127.57, 121.72, 119.36, 119.04, 115.91 (Aromat), 16.02, 13.11, 12.74 (Ar-CH₃).
Zersetzung (Tₒₙ): 298°C

d) 4,4'-Biphenylen-bis-(4-hydroxy)benzoat (3a)
Aufreinigung: Umkristallisation aus 1500 ml Cyclohexanon.

| | | | |
|---|---|---|---|
| Ansatz: | 8.75 g | (0.047 mol) | 4,4'-Dihydroxybiphenyl |
| | 12.98 g | (0.094 mol) | 4-Hydroxybenzoesäure |
| | 2.00 g | (0.01 mol) | p-Toluolsulfonsäure |
| | 250 ml | | p-Xylol |

Ausbeute: 15.40 g (77% d.Th.)
Charakterisierung:
IR (KBr): ν (cm⁻¹): 3415, 1703, 1603, 1587, 1511, 1279, 1197, 1160, 1079, 1004, 851.
¹H-NMR (DMSO): δ (ppm): 10.52 (s, 2H, -OH), 8.00 (d, 4H, Aromat), 7.74 (d, 4H, Aromat), 7.32 (d, 4H, Aromat), 6.93 (d, 4H, Aromat).
¹³C-NMR (DMSO): δ (ppm): 164.57 (-COO-), 162.95, 150.56, 137.14, 132.48, 127.95, 122.72, 119.51, 115.84 (Aromat).
Zersetzung (Tₒₙ): 320°C

e) 2,2'-Dimethyl-4,4'-biphenylen-bis-(4-hydroxy)benzoat (3b)
Aufreinigung: Umkristallisation aus 700 ml 1,4-Dioxan

| | | | |
|---|---|---|---|
| Ansatz: | 9.43 g | (0.044 mol) | 2,2'-Dimethyl-4,4'-dihydroxybiphenyl |
| | 12.19 g | (0.088 mol) | 4-Hydroxybenzoesäure |
| | 2.00 g | (0.01 mol) | p-Toluolsulfonsäure |
| | 250 ml | | p-Xylol |

Ausbeute: 14.73 g (74% d.Th.)
Charakterisierung:
IR (KBr): ν (cm⁻¹): 3410, 1700, 1607, 1592, 1513, 1449, 1279, 1221, 1154, 1086, 1007, 850.
¹H-NMR (DMSO): δ (ppm): 10.52 (s, 2H, -OH), 7.99 (d, 4H, Aromat), 7.15 (m, 6H, Aromat), 6.93 (d, 4H, Aromat), 2.04 (s, 6H, Ar-CH₃).
¹³C-NMR (DMSO): δ (ppm): 164.53 (-COO-), 162.86, 150.07, 137.86, 137.20, 132.37, 130.32, 123.29, 119.58, 115.80 (Aromat), 19.72 (Ar-CH₃).
Zersetzung (Tₒₙ): 242°C

### Referenzbeispiel 1.3: Darstellung von Mesogendiolen über geschützte 4-Hydroxybenzoesäuren

A) Allgemeine Arbeitsvorschrift
i) Einführen einer Schutzgruppe an der Hydroxyfunktion der 4-Hydroxybenzoesäure
   Die entsprechende 4-Hydroxybenzoesäure wird in 1 M wässriger Natronlauge gelöst. Bei 0°C wird der Chlorameisensäurebenzylester zugetropft. Die Reaktionsmischung wird 2 h gerührt und anschließend in 2 M Salzsäure gegossen. Der erhaltene Niederschlag wird abfiltriert und umkristallisiert.
ii) Darstellung des hydroxygeschützten Mesogendiols
   Die geschützte 4-Hydroxybenzoesäure wird in 1,2-Dichlorethan gelöst. Die Lösung wird mit Thionylchlorid versetzt und anschließend 2 h unter Rückfluß erhitzt. Das Lösungsmittel und nicht abreagiertes Thionylchlorid werden im Vakuum abdestilliert. Das entstandene Säurechlorid wird in 1,2-Dichlorethan gelöst und zu einer Lösung aus einem aromatischen Diol und Triethylamin in 1,2-Dichlorethan zugetropft. Die Reaktionsmischung wird 2 h unter Rückfluß erhitzt, anschließend auf Raumtemperatur abgekühlt und filtriert. 1,2-Dichlorethan wird im Vakuum abdestilliert, der Rückstand in Chloroform aufgenommen und mit Wasser gewaschen. Die organische Phase wird über Na₂SO₄ getrocknet. Anschließend wird das Chloroform abdestilliert und das Rohprodukt durch Umkristallisation gereinigt.
iii) Freisetzung des Mesogendiols durch katalytische Entfernung der Schutzgruppen
   Das geschützte Mesogendiol wird zusammen mit Palladium auf Aktivkohle (5%) in Tetrahydrofuran vorgelegt. Die Reaktionsmischung wird mit Wasserstoff gesättigt und anschließend unter Wasserstoffatmosphäre über Nacht bei 40°C gerührt. Anschließend wird die Reaktionsmischung filtriert und das THF abdestilliert.

B) Nach allgemeiner Arbeitsvorschrift hergestellte Verbindungen:
a) Benzyloxy-4-hydroxybenzoesäure
Aufreinigung: Umkristallisation aus 1200 ml Aceton/Wasser 1:1

| | | | |
|---|---|---|---|
| Ansatz: | 20.00 g | (0.143 mol) | 4-Hydroxybenzoesäure |
| | 29.6 g | (0.173mol) | Chlorameisensäurebenzylester |
| | 300 ml | | 1 M Natronlauge |
| | 500 ml | | 2 M Salzsäure |

Ausbeute: 29.3 g (75% d.Th.) als weißer Feststoff
Charakterisierung:
IR (KBr): ν (cm⁻¹): 3036, 2874, 2673, 2544, 1754, 1696, 1608, 1428, 1163, 957, 853.
¹H-NMR (DMSO): δ (ppm): 13.10 (s, 1H, -COOH), 8.00 (d, 2H, Aromat),7.40 (m, 7H, Aromat), 5.29 (s, 2H, Ar-CH₂-OCOO-).

b) Benzyloxy-4-hydroxyvanillinsäure
Aufreinigung: Umkristallisation aus einer Mischung aus 450 ml Wasser und 250 ml Aceton

| | | | |
|---|---|---|---|
| Ansatz: | 18.90 g | (0.11 mol) | Vanillinsäure |
| | 25.60 g | (0.15 mol) | Chlorameisensäurebenzylester |
| | 400 ml | | 1 M Natronlauge |
| | 1000 ml | | 2 M Salzsäure |

Ausbeute: 20.3 g (61% d.Th.)
Charakterisierung:
IR (KBr): ν (cm⁻¹): 2963, 2619, 1780, 1761, 1686, 1608, 1427, 1241, 1182, 1124, 1029.
¹H-NMR (DMSO): δ (ppm): 13.10 (s, 1H, -COOH), 7.58 (m, 2H, Aromat), 7.38 (m, 6H, Aromat), 5.27 (s 2H, Ar-CH₂-OCOO-), 3.81 (s, 3H, Ar-OCH₃).

c) 2-tert.-Butyl-1,4-phenylen-bis-(4-benzylcarbonato)benzoat
Aufreinigung: Umkristallisation aus 1000 ml Cyclohexan

| | | | |
|---|---|---|---|
| Ansatz: | 35.52 g | (0.13 mol) | Benzyloxy-4-hydroxybenzoesäure |
| | 12 ml | (0.17 mol) | Thionylchlorid |
| | 150 ml | | 1,2-Dichlorethan |
| | 9.72 g | (0.06 mol) | tert.-Butylhydrochinon |
| | 37 ml | (0.26 mol) | Triethylamin |
| | 200 ml | | 1,2-Dichlorethan |

Ausbeute: 17.2 g (43% d.Th.) als weißer Feststoff
Charakterisierung:
IR (KBr): ν (cm⁻¹): 3037, 2952, 2869, 1759, 1736, 1606, 1506, 1390, 1258, 1160, 1073, 727.
¹H-NMR (CDCl₃): δ (ppm): 8.25 (m, 4H, Aromat), 7.3 (m, 17 H, Aromat), 5.30 (s, 4H, Ar-CH₂-OCOO-), 1.40 (s, 9H, Ar-C(CH₃)₃).

d) 2-Phenyl-1,4-phenylen-bis-(4-benzylcarbonato)benzoat
Aufreinigung: Umkristallisation aus 1000 ml Cyclohexan

| | | | |
|---|---|---|---|
| Ansatz: | 29.3 g | (0.11 mol) | Benzyloxy-4-hydroxybenzoesäure |
| | 12 ml | (0.17 mol) | Thionylchlorid |
| | 150 ml | | 1,2-Dichlorethan |
| | 7.91 g | (0.043 mol) | Phenylhydrochinon |
| | 31 ml | (0.22 mol) | Triethylamin |
| | 200 ml | | 1,2-Dichlorethan |

Ausbeute: 16.0 g (54% d.Th.) als weißer Feststoff
Charakterisierung:
IR (KBr): ν (cm⁻¹): 2960, 2923, 1758, 1737, 1605, 1508, 1486, 1411, 1381, 1255, 1162, 1078, 1016.
¹H-NMR (CDCl₃): δ (ppm): 8.24 (dd, 2H, Aromat), 8.04 (dd, 2H, Aromat), 7.34 (m, 23H, Aromat), 5.29 (s, 2H, Ar-CH₂-OCOO-), 5.27 (s, 2H, -CH₂-OCOO-).

e) 2-tert.-Butyl-1,4-phenylen-bis-(3-methoxy-4-benzylcarbonato)benzoat
Aufreinigung: Aus THF-Lösung in Eiswasser umgefällt

| | | | |
|---|---|---|---|
| Ansatz: | 12.04 g | (0.04 mol) | Benzyloxyvanillinsäure |
| | 7.3 ml | (0.1 mol) | Thionylchlorid |
| | 70 ml | | 1,2-Dichlorethan |
| | 2.66 g | (0.016 mol) | tert.-Butylhydrochinon |
| | 11.4 ml | (0.08 mol) | Triethylamin |
| | 130 ml | | 1,2-Dichlorethan |

Ausbeute: 5.98 g (51% d.Th.)
Charakterisierung:
IR (KBr): ν (cm⁻¹): 2968, 1768, 1738, 1607, 1508, 1413, 1288, 1248, 1166, 1083, 1027, 741.
¹H-NMR (CDCl₃): δ (ppm): 7.85 (m, 4H, Aromat), 7.38 (m, 14H, Aromat), 7.14 (s, 1H, Aromat), 5.30 (s, 4H, Ar-CH₂-OCOO-), 3.89 (s, 6H, Ar-OCH₃), 1.39 (s, 9H, Ar-C(CH₃)₃).

f) 2-tert.-Butyl-1,4-phenylen-bis-(4-hydroxy)benzoat (2d)

| | | | |
|---|---|---|---|
| Ansatz: | 22.6 g | (0.033 mol) | 2-tert.-Butyl-1,4-phenylen-bis-(4-benzylcarbonato)benzoat |
| | 2.5 g | | Palladium auf Aktivkohle (5%) |
| | 200 ml | | THF |

Ausbeute: 12.0 g (89% d.Th.) als weißer Feststoff
Charakterisierung:
IR (KBr): ν (cm⁻¹): 3389, 2969, 1700, 1608, 1591, 1514, 1281, 1160, 1079, 851, 766.
¹H-NMR (DMSO): δ (ppm): 10.54 (s, 2H, -OH), 8.00 (dd, 4H, Aromat), 7.19 (d, 2H, Aromat), 6.94, (t, 5H, Aromat), 1.30 (s, 9H, Ar-C(CH₃)₃).
¹³C-NMR (DMSO): δ (ppm): 164.51, 164.41 (-COO-), 162.82, 162.68, 147.85, 146.38, 142.30, 132.23, 125.41, 120.38, 119.45, 119.32, 115.41, 115.57 (Aromat), 34.30 (Ar-C(CH₃)₃), 29.80 (Ar-C(CH₃)₃).
Zersetzung (Tₒₙ): 288°C

g) 2-Phenyl-1,4-phenylen-bis-(4-hydroxy)benzoat (2e)

| | | | |
|---|---|---|---|
| Ansatz: | 15.9 g | (0.023 mol) | 2-Phenyl-1,4-phenylen-bis-(4-benzylcarbonato)benzoat |
| | 2.5 g | | Palladium auf Aktivkohle (5%) |
| | 200 ml | | THF |

Ausbeute: 9.5 g (96% d.Th.) als weißer Feststoff
Charakterisierung:
IR (KBr): ν (cm⁻¹): 3392, 3064, 1700, 1608, 1590, 1513, 1482, 1278, 1160, 1079, 852.
¹H-NMR (DMSO): δ (ppm) : 10.51 (s, 2H, -OH), 8.00 (d, 4H, Aromat), 7.85 (d, 2H, Aromat), 7.33 (m, 8H, Aromat), 6.93, (d, 2H, Aromat), 6.85 (d, 2H, Aromat).
¹³C-NMR (DMSO): δ (ppm): 164.36, 164.25 (-COO-), 162.76, 162.70, 148.47, 145.05, 136.13, 135.25, 132.31, 132.15, 128.61, 128.38, 127.82, 124.55, 123.71, 122.08, 119.21, 119.01, 115.60 (Aromat).
Zersetzung (Tₒₙ) : 290°C

h) 2-tert.-Butyl-1,4-phenylen-bis-(3-methoxy-4-hydroxy)benzoat (2f)
Aufreinigung: Aus Isopropanol in Wasser umgefällt

| | | |
|---|---|---|
| Ansatz: | 11.45 g | (0.016 mol) 2-tert.-Butyl-1,4-phenylen-bis-(3-methoxy-4-benzylcarbonato)benzoat |
| | 1 g | Palladium auf Aktivkohle (5%) |
| | 100 ml | THF |

Ausbeute: 4.7 g (63% d.Th.) als gelblicher Feststoff
Charakterisierung:
IR (KBr): ν (cm⁻¹): 3406, 2965, 2861, 1727, 1596, 1515, 1430, 1284, 1208, 1167, 1076, 870.
¹H-NMR (CDCl₃): δ (ppm): 7.85 (m, 2H, Aromat), 7.70 (dd, 1H, Aromat), 7.13 (m, 4 H, Aromat), 6.17, (d, 2H, Aromat), 3.99 (s, 6H, Ar-OCH₃), 1.39 (s, 9H, Ar-C(CH₃)₃).
¹³C-NMR (CDCl₃): δ (ppm): 165.04 (-COO-), 150.77, 150.68, 148.16, 146.81, 146.44, 146.33, 142.85, 124.98, 121.59, 121.43, 120.57, 120.00, 114.43, 114.29, 112.31, 112.18 (Aromat), 56.14 (Ar-OCH₃), 34.67 (Ar-C(CH₃)₃), 30.06 (Ar-C(CH₃)₃).
Schmelzpunkt: 116°C

### Referenzbeispiel 2: Herstellung von vernetzbaren Spacereinheiten 3,4-Di-(6-acryloyloxyhexyloxy)benzoesäure

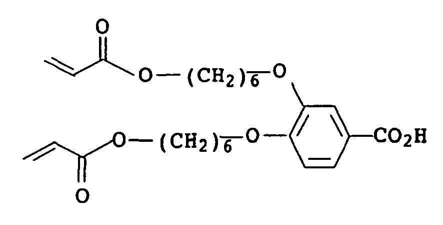

a) 3,4-Di-(6-hydroxyhexyloxy)benzoesäure
   10.93 g (0.06 mol) 3,4-Dihydroxybenzoesäureethylester werden in 200 ml 2-Butanon vorgelegt. Nach Zugabe von 5.3 g (0.133 mol) Natriumhydroxid, 19.9 g (0.133 mol) Natriumiodid und 17.74 ml (0.133 mol) 6-Chlorhexanol wird die Reaktionsmischung 20 h bei 60°C gerührt. Anschließend wird das 2-Butanon abdestilliert. Der Rückstand wird in 300 ml 0.4 M Natriumhydroxidlösung aufgenommen und viermal mit 100 ml Diethylether extrahiert. Die Etherphasen werden vereinigt und am Rotationsverdampfer eingeengt. Der Rückstand wird in 200 ml Methanol gelöst. Nach Zugabe von 60 ml einer 4.5 M Kaliumhydroxidlösung wird die Reaktionsmischung 20 h unter Rückfluß erhitzt. Nach Einengen der Reaktionsmischung am Rotationsverdampfer wird der Rückstand in 200 ml einer 0.4 M Natriumhydroxidlösung aufgenommen und dreimal mit 100 ml Diethylether gewaschen. Die wässrige Phase wird anschließend mit konz. Salzsäure angesäuert (pH = 1). Das ausgefallene Produkt wird abfiltriert und aus 500 ml Wasser umkristallisiert.
   Ausbeute: 14.3 g (67% d.Th.) als weißer Feststoff
   Charakterisierung:
   IR (KBr): ν (cm⁻¹): 3327, 2933, 2852, 1670, 1586, 1517, 1442, 1278, 1227, 1141, 869.
   ¹H-NMR (DMSO): δ (ppm): 12.59 (s, 1H, -COOH), 7.51 (dd, 1H, Aromat), 7.41 (d, 1H, Aromat), 7.01 (d, 1H, Aromat), 4.33 (s, 2H, -OH), 3.97 (m, 4H, Ar-O-CH₂-), 3.40 (m, 4H, -CH₂-OH), 1.71 (m, 4H, Alkoxy-CH₂), 1.38 (m, 12H, Alkoxy-CH₂).
   Schmelzpunkt: 133-135°C
b) 3,4-Di-(6-acryloyloxyhexyloxy)]benzoesäure
   13.6 g (0.04 mol) 3,4-Di-[6-hydroxyhexyloxy)]benzoesäure, 9.6 ml (0.06 mol) N,N-Diethylanilin und 100 mg 2,6-Di-tert.-butyl-p-kresol als Stabilsator werden in 150 ml 1,4-Dioxan vorgelegt und auf 60°C erhitzt. Bei 60°C werden 6.9 ml (0.085 mol) Acrylsäurechlorid so langsam zugetropft, daß die Reaktionstemperatur nicht über 65°C ansteigt. Die Reaktionsmischung wird 2.5 h bei 60°C gerührt. Nach Abkühlen der Lösung auf Raumtemperatur wird diese unter Rühren auf Eiswasser gegossen. Man erhält einen Niederschlag von 3,4-Di-(6-acryloyloxyhexyloxy)benzoesäure, der abfiltriert, getrocknet und aus 300 ml Isopropanol umkristallisiert wird.
   Ausbeute: 13.1 g (71% d.Th.) als weißer Feststoff
   Charakterisierung:
   IR (KBr): ν (cm⁻¹): 3086, 2940, 2854, 1723, 1669, 1596, 1441, 1278, 1196, 1042, 868.
   ¹H-NMR (DMSO): δ (ppm): 12.55 (s, 1H, -COOH), 7.51 (dd, 1H, Aromat), 7.41 (d, 1H, Aromat), 7.01 (d, 1H, Aromat), 6.29 (dd, 2H, -CH=CH₂ trans), 6.14 (dd, 2H, -CH=CH₂), 5.90 (dd, 2H, -CH=CH₂ cis), 4.03 (m, 8H, Ar-O-CH₂- und -COO-CH₂-), 1.72 (m, 4H, Alkoxy-CH₂), 1.61 (m, 4H, Alkoxy-CH₂), 1.41 (m, 8H, Alkoxy-CH₂).
   ¹³C-NMR (DMSO): δ (ppm): 170.27 (-COOH), 167.29, 165.68 (-COO-CH₂), 152.65, 148.06, 131.43, 128.58, 123.48, 123.08, 114.03, 112.48 (Aromat und -CH=CH₂), 68.50 (Ar-O-CH₂-), 68.36 (-COO-CH₂-), 28.70, 28.65, 28.27, 25.66, 25.35, 25.27 (Alkoxy-CH₂).
   Schmelzpunkt: 90-92°C

### Beispiel 1: Darstellung von Tetraacrylaten

Folgende Tetraacrylate wurden hergestellt:

### Tetraacrylate:

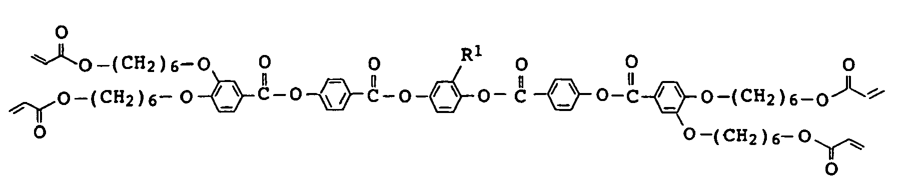

**14a** R¹ = -H
**14b** R¹ = -CH₃

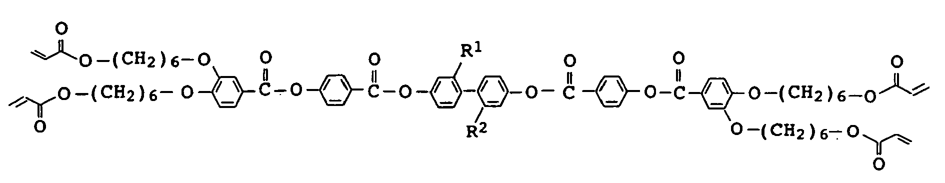

**14c** R¹, R² = -H
**14d** R¹, R² = -CH₃

A) Allgemeine Arbeitsvorschrift zur Darstellung von Tetraacrylaten mittels Säurechlorid
i) Darstellung des Säurechlorids
   Das jeweilige spacertragende Hydroxybenzoesäure wird in Methylenchlorid suspendiert. Unter Eiskühlung wird ein etwa 8- bis 10-molarer Überschuß an Oxalylchlorid langsam zugetropft. Die Reaktionsmischung wird bei Raumtemperatur gerührt, bis keine Gasentwicklung mehr zu beobachten ist. Man erhält eine klare Lösung, aus der das Methylenchlorid und nicht abreagiertes Oxalylchlorid im Vakuum abdestilliert werden. Das zurückbleibende Säurechlorid wird ohne weitere Aufreinigung weiter umgesetzt.
ii) Umsetzung des Säurechlorids mit Mesogendiolen
   Das entsprechende Mesogendiol wird zusammen mit Triethylamin und 2,6-Di-tert.-butyl-p-kresol als Stabilisator (nur bei Acrylaten) in THF vorgelegt. Das Säurechlorid wird in THF gelöst und unter Eiskühlung zugetropft. Die Mischung wird anschließend 24 h bei Raumtemperatur gerührt. Danach wird die Mischung filtriert und am Rotationsverdampfer eingeengt. Der Rückstand wird in Chloroform aufgenommen und dreimal mit Wasser extrahiert. Die Lösungsmittel wird anschließend abgedampft, das erhaltene Rohprodukt im Vakuum getrocknet und durch Umkristallisation oder Säulenchromatographie aufgereinigt.

B) Nach allgemeiner Arbeitsvorschrift synthetisierte Tetraacrylate
a) Tetraacrylat **14a**
Aufreinigung: Säulenchromatographie (Chloroform:Essigsäureethylester 40:1)

| | | | |
|---|---|---|---|
| Ansatz: | 3.55 g | (7.68-10⁻³ mol) | 3,4-Di-[6-(acryloyloxyhexyloxy)]benzoesäure |
| | 6 ml | (0.070 mol) | Oxalylchlorid |
| | 40 ml | | Methylenchlorid |
| | 1.21 g | (3.45·10⁻³ mol) | 1,4-Phenylen-bis-(4-hydroxy)benzoat |
| | 2 ml | (0.014 mol) | Triethylamin |
| | 100 ml | | THF |
| | 50 mg | | 2,6-Di-tert.-butyl-p-kresol |

Ausbeute: 1.84 g (43% d.Th.) als weißer Feststoff
Charakterisierung:
IR (KBr): ν (cm⁻¹): 2939, 2855, 1735, 1599, 1508, 1410, 1270, 1204, 1160, 1065, 1016, 811.
¹H-NMR (CDCl₃): δ (ppm): 8.23 (d, 4H, Aromat), 7.78 (dd, 2H, Aromat), 7.60 (d, 2H, Aromat), 7.31 (d, 2H, Aromat), 7.19 (s, 4H, Aromat), 6.88 (d, 4H, Aromat), 6.34 (dd, 4H, -CH=CH₂ trans), 6.06 (dd, 4H, -CH=CH₂), 5.75 (dd, 4H, -CH=CH₂ cis), 4.08 (m, 16H, -COO-CH₂- und Ar-O-CH₂-), 1.84 (m, 8H, Alkoxy-CH₂), 1.66 (m, 8H, Alkoxy-CH₂), 1.45 (m, 16H, Alkoxy-CH₂).
¹³C-NMR (CDCl₃): δ (ppm): 166.24, 164.36, 164.31 (-COO-), 155.42, 153.95, 148.59, 148.35, 131.81, 130.51, 128.52, 126.72, 124.60, 122.63, 122.12, 121.02, 114.53, 111.90 (Aromat und -CH=CH₂), 69.05, 68.80 (Ar-O-CH₂-), 64.40 (-COO-CH₂-), 28.88, 28.53, 26.56, 25.64, 25.31 (Alkoxy-CH₂).

Therm. Verhalten: Cr 121 N 127 I (DSC, 2. Aufheizen, Heizrate 10 K/min, 2 Gew.-% Schwefel).
b) Tetraacrylat **14b**
Aufreinigung: Säulenchromatographie (Chloroform:Essigsäureethylester 40:1)

| | | | |
|---|---|---|---|
| Ansatz: | 2.00 g | (4.32·10⁻³ mol) | 3,4-Di-[6-(acryloyloxy-hexyloxy)]benzoesäure |
| | 3.5 ml | (0.041 mol) | Oxalylchlorid |
| | 30 ml | | Methylenchlorid |
| | 0.71 g | (1.94·10⁻³ mol) | 2-Methyl-1,4-phenylen-bis-(4-hydroxy)-benzoat |
| | 1 ml | (0.007 mol) | Triethylamin |
| | 80 ml | | THF |
| | 50 mg | | 2,6-Di-tert.-butyl-p-kresol |

Ausbeute: 1.65 g (68% d.Th.) als weißer Feststoff
Charakterisierung:
IR (KBr): ν (cm⁻¹): 2939, 2861, 1731, 1598, 1519, 1430, 1410, 1202, 1158, 1068, 1015, 811.
¹H-NMR (CDCl₃): δ (ppm): 8.29 (m, 4H, Aromat), 7.84 (dd, 2H, Aromat), 7.67 (d, 2H, Aromat), 7.38 (d, 3H, Aromat), 7.20 (m, 4H, Aromat), 6.95 (d, 2H, Aromat), 6.40 (dd, 4H, -CH=CH₂ trans), 6.12 (dd, 4H, -CH=CH₂), 5.81 (dd, 4H, -CH=CH₂ cis), 4.14 (m, 16H, -COO-CH₂- und Ar-O-CH₂-), 2.28 (s, 3H, Ar-CH₃), 1.88 (m, 8H, Alkoxy-CH₂), 1.72 (m, 8H, Alkoxy-CH₂), 1.52 (m, 16H, Alkoxy-CH₂).
¹³C-NMR (CDCl₃): δ (ppm): 166.16, 164.32, 163.93 (-COO-), 155.36, 155.32, 153.91, 148.54, 148.30, 146.93, 131.74, 131.71, 130.45, 130.42, 128.48, 126.75, 126.58, 124.55, 124.02, 122.81, 122.11, 122.03, 120.96, 119.96, 114.47, 111.86 (Aromat und -CH=CH₂), 68.99, 68.74 (Ar-O-CH₂-), 64.37, 64.34 (-COO-CH₂-), 28.92, 28.81, 28.48, 25.60 (Alkoxy-CH₂), 16.36 (Ar-CH₃).

Therm. Verhalten: Cr 107 N 122 I (DSC, 2. Aufheizen, Heizrate 10 K/min, 2 Gew.-% Schwefel).
c) Tetraacrylat **14c**
Aufreinigung: Säulenchromatographie (Chloroform:Essigsäureethylester 40:1)

| | | | |
|---|---|---|---|
| Ansatz: | 3.04 g | (6.57·10⁻³ mol) | 3,4-Di-[6-(acryloyloxy-hexyloxy)]benzoesäure |
| | 5 ml | (0.058 mol) | Oxalylchlorid |
| | 40 ml | | Methylenchlorid |
| | 1.26 g | (2.95·10⁻³ mol) | 4,4'-Biphenylen-bis-(4-hydroxy)benzoat |
| | 1.5 ml | (0.01 mol) | Triethylamin |
| | 100 ml | | THF |
| | 50 mg | | 2,6-Di-tert.-butyl-p-kresol |

Ausbeute: 2.79 g (72% d.Th.) als weißer Feststoff
Charakterisierung:
IR (KBr): ν (cm⁻¹): 2937, 2866, 1733, 1597, 1431, 1270, 1193, 1161, 1069, 1005, 879.
¹H-NMR (CDCl₃): δ (ppm): 8.31 (d, 4H, Aromat), 7.84 (dd, 2H, Aromat), 7.66 (m, 6H, Aromat), 7.36 (m, 6H, Aromat), 6.94 (d, 4H, Aromat), 6.40 (dd, 4H, -CH=CH₂ trans), 6.12 (dd, 4H, -CH=CH₂), 5.81 (dd, 4H, -CH=CH₂ cis), 4.15 (m, 16H, -COO-CH₂- und Ar-O-CH₂-), 1.90 (m, 8H, Alkoxy-CH₂), 1.73 (m, 8H, Alkoxy-CH₂), 1.52 (m, 16H, Alkoxy-CH₂).
¹³C-NMR (CDCl₃): δ (ppm): 166.26, 164.47, 164.38 (-COO-) 155.40, 153.95, 150.37, 148.61, 138.23, 131.83, 130.68, 128.52, 128.23, 126.84, 124.60, 122.12, 122.03, 121.03, 114.53, 111.92 (Aromat und -CH=CH₂), 69.07, 68.81 (Ar-O-CH₂-), 64.46, 64.41 (-COO-CH₂-), 28.99, 28.87, 28.54, 25.60 (Alkoxy-CH₂).

Therm. Verhalten: Cr 123 N 155 I (DSC, 2. Aufheizen, Heizrate 10 K/min, 2 Gew.-% Schwefel).
d) Tetraacrylat 14d
Aufreinigung: Säulenchromatographie (Chloroform:Essigsäureethylester 40:1)

| | | | |
|---|---|---|---|
| Ansatz: | 3.05 g | (6.60·10⁻³ mol) | 3,4-Di-[6-(acryloyloxy-hexyloxy)]benzoesäure |
| | 5.5 ml | (0.064 mol) | Oxalylchlorid |
| | 40 ml | | Methylenchlorid |
| | 1.34 g | (2.95·10⁻³ mol) | 2,2'-Dimethyl-4,4'-biphenylen-bis-(4-hydroxy)benzoat |
| | 1.5 ml | (0.01 mol) | Triethylamin |
| | 100 ml | | THF |
| | 50 mg | | 2,6-Di-tert.-butyl-p-kresol |

Ausbeute: 1.66 g (42% d.Th.) als weißer Feststoff
Charakterisierung:
IR (KBr): ν (cm⁻¹): 2936, 2861, 1727, 1596, 1516, 1430, 1274, 1194, 1064, 1010, 816.
¹H-NMR (CDCl₃): δ (ppm): 8.31 (d, 4H, Aromat), 7.85 (dd, 2H, Aromat), 7.67 (d, 2H, Aromat), 7.38 (d, 4H, Aromat), 7.16 (m, 6H, Aromat), 6.95 (d, 2H, Aromat), 6.40 (dd, 4H, -CH=CH₂ trans), 6.12 (dd, 4H, -CH=CH₂), 5.83 (dd, 4H, -CH=CH₂ cis), 4.13 (m, 16H, -COO-CH₂- und Ar-O-CH₂-), 2.13 (s, 6H, Aromat), 1.91 (m, 8H, Alkoxy-CH₂), 1.73 (m, 8H, Alkoxy-CH₂), 1.50 (m, 16H, Alkoxy-CH₂).
¹³C-NMR (CDCl₃): δ (ppm): 166.23, 164.54, 164.38 (-COO-) 155.33, 153.94, 150.03, 148.60, 138.39, 137.73, 131.76, 130.47, 128.52, 126.95, 124.58, 122.78, 122.09, 121.04, 118.76, 114.52, 111.90 (Aromat und -CH=CH₂), 69.05, 68.78 (Ar-O-CH₂-), 64.43, 64.39 (-COO-CH₂-), 28.98, 28.87, 28.53, 25.64 (Alkoxy-CH₂), 19.99 (Ar-CH₃).

Therm. Verhalten: Cr 132 N 143 I (Polarisationsmikroskop)

### Beispiel 2: Herstellung einer cholesterischen Flüssigkristallmischung

Es wird eine Lösung bestehend aus 20 Teilen Cholesterenmischung bestehend aus 93,85 Gew.-% des achiralen Tetraacrylates **14c** und 6,15 Gew.-% der chiralen Verbindung der Formel B 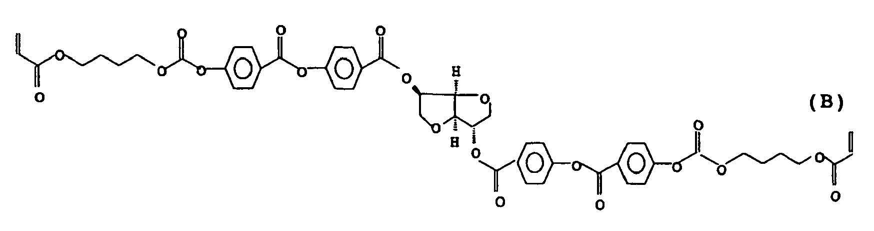 mit 3 Teilen Photoinitiator Irgacure 184 (1-Hydroxycyclohexylphenylketon) in 77 Teilen Methylethylketon gelöst. Die erhaltene Mischung wurde, wie in der WO-A-99/11733 beschrieben, mittels einer Gießvorrichtung auf eine 15 µm Polyethylenterephthalatfolie aufgetragen, bei 60°C getrocknet und durch Bestrahlung mit UV-Licht vernetzt. Die Trockenschichtdicke betrug 2,5 µm. Die Schicht zeigte eine vom Betrachtungswinkel abhängige Farbigkeit mit λₘₐₓ = 611 nm.

## Patentansprüche

1. Polymerisierbare flüssigkristalline Verbindungen **gekennzeichnet durch** die allgemeine Formel (I) 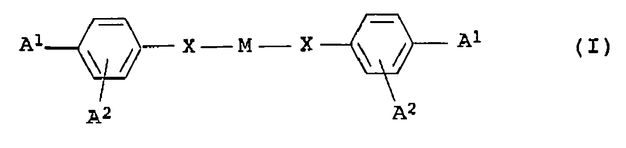 worin
die Reste X gleich oder verschieden sind und jeweils für eine Einfachbindung, -O-, -S-, -C=N-, -O-CO-, -CO-O-, -O-CO-O-, -CO-NR-, -NR-CO-, -NR-, -O-CO-NR, -NR-CO-O-, -CH₂-O- oder -NR-CO-NR stehen, worin R für H oder C₁-C₄-Alkyl steht; und
M für eine mesogene Gruppe steht; und
A¹ und A² gleich oder verschieden sind und unabhängig voneinander jeweils für eine Gruppe der Formel
Z-X-(Sp)ₙ-
stehen, worin
Z für einen vernetzbaren Rest steht, der ausgewählt ist unter
H₂C=CH-, HC≡C-, 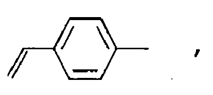 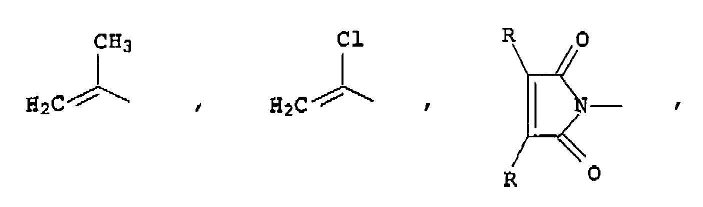 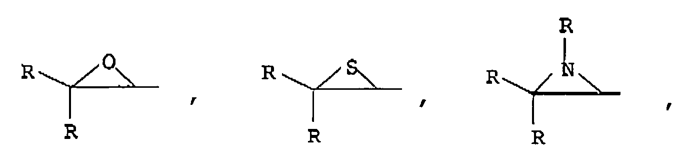 -N=C=O, -N=C=S und -O-C≡N,
wobei die Reste R unabhängig voneinander für C₁-C₄-Alkyl stehen;
X eine der oben angegebenen Bedeutungen besitzt;
Sp ausgewählt ist unter
-(CH₂)ₚ-, -(CH₂CH₂O)ₘCH₂CH₂-, -CH₂CH₂SCH₂CH₂-, -CH₂CH₂NHCH₂CH₂-, 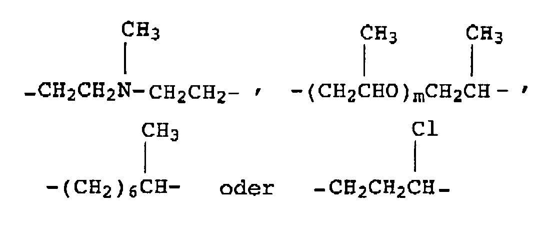 wobei
m für 1 bis 3 und p für 1 bis 12 steht; und
n für 0 oder 1 steht.

2. Verbindungen nach Anspruch 1, **dadurch gekennzeichnet, daß** sich A² jeweils in ortho-Stellung zu A¹ befindet.

3. Verbindungen nach einem der vorhergehenden Ansprüche, **dadurch gekennzeichnet, daß** M ausgewählt ist unter Gruppen der allgemeinen Formel II: 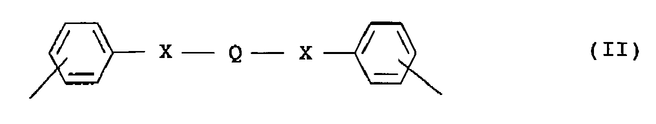 worin
X die oben angegebenen Bedeutungen besitzt, und
Q für gegebenenfalls substituiertes Alkylen oder eine gegebenenfalls substituierte aromatische Brückengruppe steht.

4. Verbindungen nach Anspruch 3, **dadurch gekennzeichnet, dass** die aromatische Brückengruppe ausgewählt ist unter 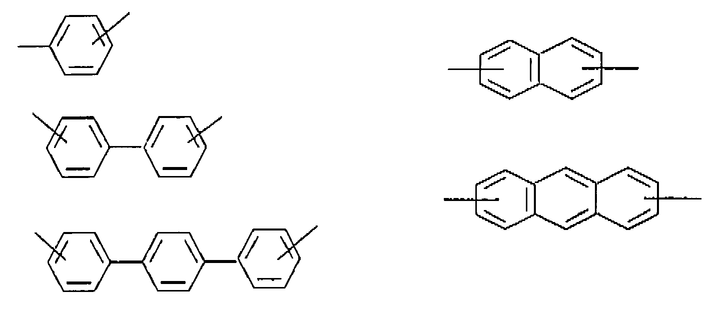 und den substituierten Analoga davon.

5. Verfahren zur Herstellung von Verbindungen nach Anspruch 1, **dadurch gekennzeichnet, daß** man eine Verbindung der Formel III 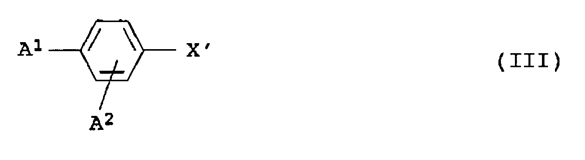 worin A¹ und A² die oben angegebenen Bedeutungen besitzen und X' für eine reaktive Seitengruppe steht,
mit einer Mesogen-Verbindung der allgemeinen Formel IV
X" - M- X" (IV)
worin M die oben angegebenen Bedeutungen besitzt und X" für eine reaktive Seitengruppe steht, umsetzt, wobei X' und X" so gewählt sind, daß sie zusammen zur Ausbildung der Gruppe X befähigt sind.

6. Verfahren nach Anspruch 5, wobei man ein Mesogen der Formel IV, worin X" für OH steht mit einer Verbindung der Formel III, worin X' für -COOH oder -COHal mit Hal = F, Cl, Br oder I steht, umsetzt.

7. Zusammensetzung, enthaltend wenigstens eine Verbindung nach einem der Ansprüche 1 bis 4 und gegebenenfalls weitere Bestandteile, ausgewählt unter cholesterischen, gegebenenfalls vernetzbaren, Verbindungen, anorganischen Pigmenten, Farbmitteln und gegebenenfalls polymerisierbaren Verdünnungsmitteln oder Trägern.

8. Pigmente, enthaltend wenigstens eine Verbindung nach einem der Ansprüche 1 bis 4 in vernetzter Form.

9. Beschichtungsmasse enthaltend eine Zusammensetzung nach Anspruch 7 oder ein Pigment nach Anspruch 8.

10. Verwendung einer Verbindung nach Anspruch 1 bis 4 zur Herstellung von optischen Elementen, wie insbesondere Filtern und Polarisatoren, Beschichtungsmassen, Effektfolien, kosmetischen Mitteln und ein- oder mehrschichtigen cholesterischen Effektpigmenten.

## Claims

1. A polymerizable liquid-crystalline compound of the general formula (I) 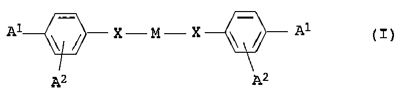 where
the radicals X are identical or different and are each a single bond, -O-, -S-, -C=N-, -O-CO-, -CO-O-, -O-CO-O-, -CO-NR-, -NR-CO-, -NR-, -O-CO-NR, -NR-CO-O-, -CH₂-O- or -NR-CO-NR, in which R is H or C₁-C₄-alkyl; and
M is a mesogenic group; and
A¹ and A² are identical or different and
are each, independently of one another, a group of the formula
Z-X-(Sp)ₙ-
where
Z is a crosslinkable radical selected from: H₂C=CH- , HC≡ C-, 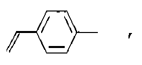 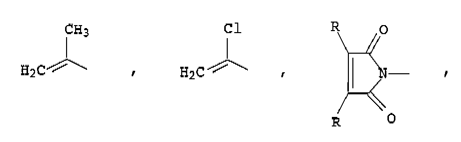 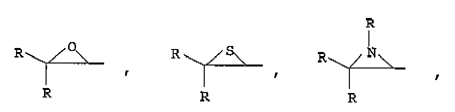 - N= C= O, -N= C= S and - O- C≡N,
where the radicals R are each, independently of one another, C₁-C₄-alkyl;
X is as defined above;
Sp is selected from:
-(CH₂)ₚ-, -(CH₂CH₂O)ₘCH₂CH₂-, -CH₂CH₂SCH₂CH₂-, -CH₂CH₂NHCH₂CH₂-, 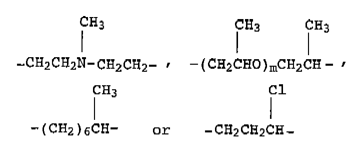
where
m is from 1 to 3 and p is from 1 to 12; and
n is 0 or 1.

2. The compound according to claim 1, wherein A² is ortho to A¹ at each occurrence.

3. The compound according to one of the preceding claims, wherein M is selected from groups of the general formula II: 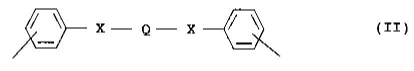 where
X is as defined above, and
Q is optionally substituted alkylene or an optionally substituted aromatic bridging group.

4. The compound according to claim 3, wherein the aromatic bridging group is selected from 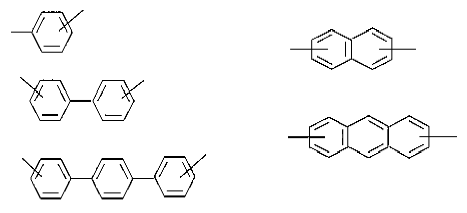 and substituted analogs thereof.

5. A process for preparing the compound according to claim 1, which comprises reacting a compound of the formula III 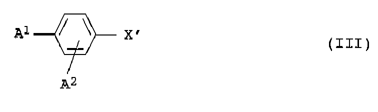 where A¹ and A² are as defined above and X' is a reactive side group,
with a mesogen compound of the general formula IV
X" - M - X" (IV)
where M is as defined above and X" is a reactive side group, X' and X" being selected such that they are capable of forming group X.

6. The process according to claim 5, wherein a mesogen of the formula IV where X" is OH is reacted with a compound of the formula III where X' is -COOH or -COHal, where Hal = F, Cl, Br or I.

7. A composition comprising at least one compound according to one of claims 1 to 4 and, if appropriate, further components selected from cholesteric, if appropriate crosslinkable compounds, inorganic pigments, colorants and if appropriate polymerizable diluents or carriers.

8. A pigment comprising at least one compound according to one of claims 1 to 4 in crosslinked form.

9. A coating composition comprising a composition according to claim 7 or a pigment according to claim 8.

10. The use of a compound according to claims 1 to 4 for producing optical elements, such as, in particular, filters and polarizers, coating compositions, effect films, cosmetic compositions and single- or multilayer cholesteric special-effect pigments.

## Revendications

1. Composés de cristaux liquides polymérisables, **caractérisés par** la formule générale (I) 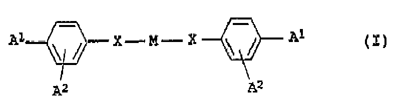 dans laquelle
les radicaux X sont identiques ou différents et désignent respectivement une liaison simple, - O-, -S-, -C=N-, -O-CO-, -CO-O-, -O-CO-O-, -CO-NR-, -NR-CO-, -NR-, -O-CO-NR-, -NR-CO-O-, -CH₂- O- ou -NR-CO-NR, où R désigne H ou un alkyle C₁-C₄ ; et
M désigne un groupe mésogène ; et
A¹ et A² sont identiques ou différents et désignent indépendamment l'un de l'autre respectivement un groupe de formule
Z-X-(Sp)ₙ-
où
Z désigne un radical réticulable qui est sélectionné parmi
H₂C=CH-, HC≡C-, 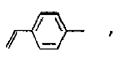 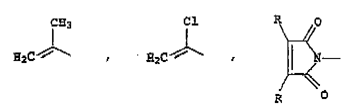 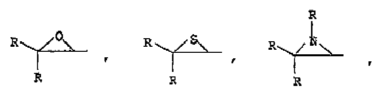 -N=C=O, -N=C=S et -O-C≡N,
les radicaux R désignant indépendamment les uns des autres un alkyle C₁-C₄ ;
X possède une des significations indiquées ci-dessus ;
Sp est sélectionné parmi
-(CH₂)ₚ-, -(CH₂CH₂O)ₘCH₂CH₂-, -CH₂CH₂SCH₂CH₂-, -CH₂CH₂NHCH₂CH₂-, 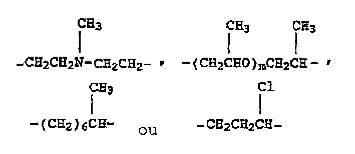
m désignant un nombre de 1 à 3 et p un nombre de 1 à 12 ; et
n désignant 0 ou 1,

2. Composés selon la revendication 1, **caractérisés en ce que** A² se trouve respectivement dans la position ortho par rapport à A¹.

3. Composés selon l'une des revendications précédentes, **caractérisés en ce que** M est sélectionné parmi des groupes de formule générale II ; 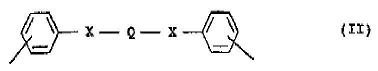 dans laquelle
X possède les significations indiquées ci-dessus, et
Q désigne alkylène le cas échéant substitué ou un groupe de liaison aromatique le cas échéant substitué.

4. Composés selon la revendication 3, **caractérisés en ce que** le groupe de liaison aromatique est sélectionné parmi 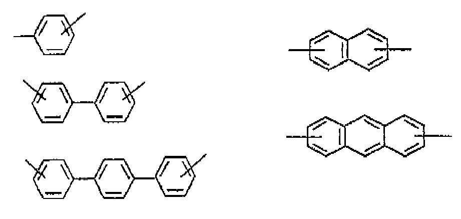 et les analogues substitués de ceux-ci.

5. Procédé pour la fabrication de composés selon la revendication 1, **caractérisé en ce que** l'on fait réagir un composé de formule III 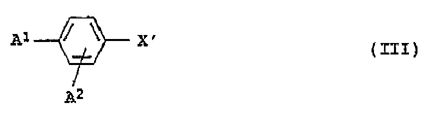 dans laquelle A¹ et A² possèdent les significations indiquées ci-dessus et X' désigne un groupe latéral réactif,
avec un composé mésogène de formule générale IV
X"- M- X" (IV)
dans laquelle M possède les significations indiquées ci-dessus et X" désigne un groupe latéral réactif, X' et X" étant sélectionnés de manière à ce qu'ils soient capables de former ensemble le groupe X.

6. Procédé selon la revendication 5, dans lequel on fait réagir un mésogène de formule IV, où X" désigne OH, avec un composé de formule III, où X' désigne -COOH ou -COHal avec Hal = F, Cl, Br ou I.

7. Composition, contenant au moins un composé selon l'une des revendications 1 à 4 et le cas échéant d'autres composants, sélectionnés parmi des composés cholestériques, le cas échéant réticulables, des pigments inorganiques, des colorants et des diluants ou des supports le cas échéant polymérisables.

8. Pigments, contenant au moins un composé selon l'une des revendications 1 à 4 sous une forme réticulée.

9. Matières de revêtement contenant une composition selon la revendication 7 ou un pigment selon la revendication 8.

10. Utilisation d'un composé selon les revendications 1 à 4 pour fabriquer des éléments optiques, comme en particulier des filtres et des polariseurs, des matières de revêtement, des feuilles à effet, des produits cosmétiques et des pigments cholestériques à effet, monocouches ou multicouches.
